# EUROPÄISCHE PATENTSCHRIFT

(11) **EP 3 452 346 B1**
(45) Veröffentlichungstag und Bekanntmachung des Hinweises auf die Patenterteilung: **24.08.2022**
(21) Anmeldenummer: 17711087.1
(22) Anmeldetag: 13.03.2017
(51) Int. Cl.: B60T 13/66, B60T 13/68, B60T 17/18

(54) **ELEKTRONISCH STEUERBARES PNEUMATISCHES BREMSSYSTEM IN EINEM NUTZFAHRZEUG SOWIE VERFAHREN ZUM ELEKTRONISCHEN STEUERN EINES PNEUMATISCHEN BREMSSYSTEMS**
ELECTRONICALLY CONTROLLABLE PNEUMATIC BRAKE SYSTEM FOR A COMMERCIAL VEHICLE, AND METHOD FOR ELECTRONICALLY CONTROLLING A PNEUMATIC BRAKE SYSTEM
SYSTÈME PNEUMATIQUE DE FREINS POUR VÉHICULE COMMERCIAL CONTRÔLABLE DE FAÇON ÉLECTRONIQUE, ET PROCÉDÉ POUR CONTRÔLER ÉLECTRONIQUEMENT UN SYSTÈME PNEUMATIQUE DE FREINS.

(30) Priorität: 02.05.2016 DE 102016005318
(43) Veröffentlichungstag der Anmeldung: 13.03.2019
(73) Patentinhaber: ZF CV Systems Europe BV, 1170 Brussels (BE)
(72) Erfinder: DIECKMANN, Thomas, 30982 Pattensen (DE); OTREMBA, Robert, 30952 Ronnenberg (DE); WULF, Oliver, 31535 Neustadt (DE)
(74) Vertreter: Rabe, Dirk-Heinrich
(86) Internationale Anmeldenummer: PCT/EP2017/000326
(87) Internationale Veröffentlichungsnummer: WO 2017/190820

(56) Entgegenhaltungen:
- WO-A1-2017/036569
- DE-A1-102010 050 578
- DE-C1- 19 504 394

## Beschreibung

Elektronisch steuerbares pneumatisches Bremssystem in einem Nutzfahrzeug sowie Verfahren zum elektronischen Steuern eines pneumatischen Bremssystems.

Die Erfindung betrifft ein elektronisch steuerbares Bremssystem in einem Nutzfahrzeug, insbesondere in einem automatisiert steuerbaren Nutzfahrzeug, sowie ein Verfahren zum elektronischen Steuern eines pneumatischen Bremssystems.

In Fahrzeugen, insbesondere Nutzfahrzeugen, mit einem pneumatischen Bremssystem, insbesondere ausgebildet als elektronisches Betriebsbremssystem (EBS oder ABS), können zum Aussteuern von Bremsdrücken von einer Steuereinheit (ECU) elektronisch Steuerventile, beispielsweise Relaisventile oder Achsmodulatoren, angesteuert werden, die dann in Abhängigkeit einer angeforderten Fahrzeug-Soll-Verzögerung pneumatisch einen Bremsdruck an die Bremszylinder von Betriebsbremsen des Bremssystems weiterleiten. Dem elektronisch ausgesteuerten pneumatischen Bremsdruck überlagert ist die Aussteuerung eines Bremsdruckes in Abhängigkeit einer Betätigung eines Bremskraftreglers bzw. Bremswertgebers über ein Bremspedal durch den Fahrer, so dass der Fahrer in einem automatisiert gesteuerten Fahrzeug im Notfall auch selbst noch eine Notbremsung vollziehen kann und/oder den elektronisch ausgesteuerten Bremsdruck übersteuern kann.

Nachteilig bei bisherigen Lösungen in bekannten Fahrzeugen, insbesondere automatisiert gesteuerten Nutzfahrzeugen, mit pneumatischen Bremssystemen ist, dass bei einem Ausfall der elektronischen Ansteuerung der Steuerventile keine elektronisch steuerbare Rückfallebene vorhanden ist. Die pneumatische Rückfallebene eines herkömmlichen Bremssystems funktioniert nur dann, wenn der Fahrer auch das Bremspedal betätigt. Ein weiteres sekundäres Bremssystem im Fahrzeug, beispielsweise ein Parkbremssystem, wird ebenfalls lediglich dann aktiv, wenn der Fahrer eingreift, um das Fahrzeug darüber abzubremsen. Dies ist aber bei einem automatisiert gesteuerten Fahrzeug in der Regel nicht der Fall, insbesondere wenn kein Fahrer im Fahrzeug bzw. am Fahrerplatz sitzt oder der Fahrer unaufmerksam oder mit anderen Dingen beschäftigt ist.

Die DE 197 50 392 A1 zeigt eine Bremssteuerung für eine Hinterachse mit einem Relaisventil als Steuerventil, einem elektronisch gesteuerten Proportionalitätsventil und einem pneumatischen Bremskraftregler. Das Proportionalitätsventil und der Bremskraftregler sind über pneumatische Steuereingänge an das Relaisventil angeschlossen und übertragen einen bestimmten Steuerdruck an den Steuereingang des Relaisventils. Das Relaisventil wiederum steuert den höheren der beiden Steuerdrücke proportional als Bremsdruck an die Bremszylinder der Betriebsbremsen der Hinterachse aus. Weiterhin ist ein Bremsventil vorgesehen, dessen Stellung abhängig von der Bremspedalbetätigung durch den Fahrer ist und das den vom Relaisventil auszusteuernden Bremsdruck vorgibt. Dazu wird vom Bremsventil ein Bremsventil-Steuerdruck pneumatisch auf den Bremskraftregler und gleichzeitig über eine Steuerelektronik elektrisch über ein Steuersignal auf das Proportionalitätsventil übertragen, die dann einen entsprechenden Steuerdruck an das Relaisventil aussteuern, wobei bei ordnungsgemäßer Funktionsweise der Steuerdruck des Bremskraftreglers geringfügig niedriger eingestellt wird als der Steuerdruck des elektronisch gesteuerten Proportionalitätsventils. Bei einem elektrischen Ausfall wird dadurch eine Rückfallebene ausgebildet, denn wenn das elektronisch gesteuerte Proportionalitätsventil ausfällt oder eine Störung aufweist, ist der vom Bremskraftregler vorgegebene Steuerdruck automatisch höher und wird somit zur Bremsdruck-Aussteuerung durch das Relaisventil verwendet.

Die DE 28 18 813 C3 beschreibt eine Anordnung zum Verhindern des Durchdrehens der Räder. Hierbei wird bei Aktivierung der Anordnung ein Magnetventil geöffnet, das den Arbeitsdruck aus einem Druckvorratsbehälter freigibt, so dass dieser über ein Wegeventil an die Magnetregelventile an den Hinterrädern ausgesteuert werden kann. Das Magnetventil wird hierbei von einer Vergleichseinrichtung derartig angesteuert, dass bei einem Durchdrehen der Hinterräder beim Anfahren die Hinterräder über die Magnetregelventile abgebremst werden und dadurch die Geschwindigkeit der Hinterräder an die Geschwindigkeit der Vorderräder angepasst wird. Wird gleichzeitig ein Bremsvorgang eingeleitet, wird das Wegeventil derartig umgeschaltet, dass Bremsdruck nur noch vom Bremsventil an die Magnetregelventile geleitet wird und darüber eine Abbremsung der Räder erfolgt.

Die DE 10 2014 013 882 zeigt ein Verfahren zum Erfassen einer unbeabsichtigten pneumatischen Aktivierung eines Relaisventils, wobei das Relaisventil zum Betätigen der Betriebsbremsen vorgesehen ist und sowohl Anforderungen von einem Bremsventil als auch Anforderungen von einer Steuerung bzw. Regelung zum automatischen Bremsen entgegennimmt.

Die US 7 520 572 B2 und die EP 1 730 006 B1 zeigen ein Verfahren, bei dem das Bremsventil zusätzlich zum Bremspedal von einer elektronischen Steuereinheit betätigt werden kann. Demnach ist ein elektronisches Bremssystem vorgesehen, dessen Betriebsbremsen durch das Bremsventil und über ein zusätzliches Relaisventil angesteuert werden. Die Bremsanforderung kann zum einen über das Bremspedal auf das Bremsventil vorgegeben werden oder aber unabhängig davon über einen Bremsventilaktuator, der zwischen dem Bremspedal und dem Bremsventil angeordnet ist. Der Bremsventilaktuator wird durch die elektronische Steuereinheit gesteuert, indem bei Vorliegen eines Steuersignals zum Abbremsen des Fahrzeuges ein Regeldruck an den Bremsventilaktuator ausgesteuert wird, der beispielsweise als ein pneumatisches Ventil ausgeführt ist, so dass das Bremsventil betätigt wird.

Die US 6 659 244 B2 zeigt einen möglichen Bremsventilaktuator für die US 7 520 572 B2 oder die EP 1 730 006 B1, der zwischen dem Bremspedal und dem Bremsventil angeordnet ist und als ein pneumatischer Aktuator mit einem Kolben ausgeführt ist. Bei Vorliegen eines Regeldrucks von der elektronischen Steuereinheit hält der pneumatische Aktuator die Kolbenstange des Bremsventils in ihrer betätigten Stellung, unabhängig von der Stellung des Bremspedals, um beispielsweise eine Pre-Trip Funktionalität im Stillstand des Fahrzeuges ausbilden zu können.

Die EP 1 530 529 B1 zeigt ein Druckregelmodul für eine DruckluftBremsanlage eines Fahrzeuges. Hierbei ist vorgesehen, dass über ein Wegeventil ein die Betriebsbremse steuerndes Relaisventil angesteuert wird, wobei die Ansteuerung in Abhängigkeit eines Schlupffalls von einer ABS-Steuereinheit stattfindet. Weiterhin ist vorgesehen, eine derartige Anordnung in einem Antriebsschlupfsystem einzusetzen, indem ein weiteres Wegeventil vorgeschaltet wird, das je nach Vorliegen eines Antriebsschlupffalls den Druckluftanschluss des Wegeventils mit einem Druckvorratsbehälter verbindet, so dass der Druck an den Betriebsbremsen über das Relaisventil auch erhöht werden kann.

Die DE 10 2010 050 578 A1 zeigt eine Bremsanlage, bei der über ein Bremsventil bzw. eine Bremspedaleinrichtung eine Bremsanforderung vorgegeben wird. Diese wird in einer Steuereinrichtung in ein elektrisches Signal umgewandelt und mit dem elektrischen Signal ein Steuerventil angesteuert, das den Bremsdruck an die Betriebsbremsen aussteuert. Fällt die Elektronik aus, wird im Redundanzfall das Steuerventil pneumatisch über Druckluftleitungen vom Betriebsbremsventil angesteuert und darüber ein Bremsdruck an die Betriebsbremsen ausgesteuert. Das Steuerventil weist hierbei mehrere Magnetventile sowie ein Relaisventil auf. Die Magnetventile können je nach gewünschter Funktion über den Steuerdruck den vom Relaisventil ausgesteuerten Bremsdruck an den Betriebsbremsen erhöhen, halten oder verringern, indem das jeweilige Magnetventil bestromt wird.

Die DE 10 2013 015 949 A1 beschreibt ein Bremssystem zur Kurvenunterstützung, wobei vorgesehen ist, mit einem elektronisch gesteuerten Mehrwegeventil einen Bremsdruck an Betriebsbremsen des Bremssystems auszusteuern, wobei ein Bremsdruck auch dann ausgesteuert wird, wenn von einem ersten Bremsventil als Bremswertgeber keine Bremsanforderung vorliegt. Das Mehrwegeventil und das erste Bremsventil sind hierbei über ein Wechselventil auf ein Relaisventil geschaltet, das den Bremsdruck an die Betriebsbremsen aussteuert. Das Wechselventil gibt hierbei lediglich den höheren der beiden Drücke vom ersten Bremsventil oder dem Wechselventil an das Relaisventil, so dass die elektrische Anforderung des Mehrwegeventils durch das erste Bremsventil übersteuert werden kann.

Die DE 10 2014 006 615 A1 beschreibt ein pneumatisches Bremssystem mit einer Betriebsbremseinrichtung, die einen Bremswertgeber aufweist zum elektrischen Ausgeben einer Bremsanforderung beispielsweise in Abhängigkeit einer Bremspedalbetätigung. Weiterhin ist eine Parkbremseinrichtung vorgesehen, die insbesondere die Radbremsen der Hinterachse betätigen kann. Der Bremswertgeber der Betriebsbremseinrichtung ist über eine Datenleitung mit der Parkbremseinrichtung verbunden, so dass im Falle eines elektrischen Defekts in der Betriebsbremseinrichtung eine vom Fahrer angeforderte Bremsung auch über die Parkbremseinrichtung an der Hinterachse erfolgen kann. Dadurch wird eine Redundanz ausgebildet. Nachteilig hierbei ist, dass das Fahrzeug im Redundanzfall lediglich mit der Parkbremse an der Hinterachse abgebremst wird, so dass sich eine ungünstige Bremskraftverteilung sowie eine begrenzte Bremswirkung ergeben.

Es ist Aufgabe der Erfindung, eine elektronisch geregelte Ansteuerung für ein pneumatisches Bremssystem sowie ein Verfahren zum elektronischen Regeln des pneumatischen Bremssystems bereitzustellen, die mit wenig Aufwand eine sichere und zuverlässige redundante Bremsung insbesondere in einem automatisiert steuerbaren Fahrzeug gewährleisten.

Diese Aufgabe wird durch ein elektronisch steuerbares Bremssystem nach Anspruch 1 sowie ein Verfahren nach Anspruch 16 gelöst. Bevorzugte Weiterbildungen sind in den Unteransprüchen angegeben.

Erfindungsgemäß ist demnach vorgesehen, in einem elektronisch steuerbaren pneumatischen Bremssystem, in dem durch eine elektronische Vorgabe einer Fahrzeug-Soll-Verzögerung, insbesondere einer negativen Beschleunigung, ein automatisiertes Fahren, insbesondere ein automatisiertes Abbremsen, ermöglicht wird, eine elektronisch-pneumatische Rückfallebene bzw. Redundanz dadurch auszubilden, dass ergänzend zu einer ersten Steuereinheit, die mindestens ein einem Bremskreis zugeordnetes elektrisch und pneumatisch steuerbares Steuerventil elektrisch ansteuert, eine zweite Steuereinheit vorgesehen ist, über die insbesondere im Redundanzfall eine elektrische Steuerung eines Parkbremsventils und eine elektrisch-pneumatische Ansteuerung des Steuerventils über ein Bypass-Ventil erfolgen kann. Der Redundanzfall tritt insbesondere dann ein, wenn eine elektrische Ansteuerung des Steuerventils über die erste Steuereinrichtung verhindert ist.

Die zweite Steuereinheit, die vorzugsweise im Parkbremsventil integriert ist und dessen Steuerung übernimmt, kann dazu in Abhängigkeit der beispielsweise automatisiert angeforderten Fahrzeug-Soll-Verzögerung das Parkbremsventil über ein Parkbrems-Signal elektrisch steuern, das dann über einen weiteren, unabhängigen Bremskreis die Radbremsen an einer Fahrzeugachse entsprechend pneumatisch betätigt. Über das dem Steuerventil zugeordnete Bypass-Ventil kann das Steuerventil pneumatisch entweder in Abhängigkeit einer von einem Fahrer durch eine Betätigung einer Betätigungsvorrichtung vorgegebenen Bremsanforderung oder einer von der zweiten Steuereinheit elektrisch vorgegebenen Bremsanforderung, insbesondere der Fahrzeug-Soll-Verzögerung, pneumatisch angesteuert werden.

Dadurch kann bereits der Vorteil erreicht werden, dass durch die zweite Steuereinheit in einem beispielsweise automatisiert gesteuerten Fahrzeug, insbesondere Nutzfahrzeug, mit einem elektronisch gesteuerten pneumatischen Bremssystem eine elektronisch-pneumatische Rückfallebene bzw. Redundanz ausgebildet werden kann. Denn für den Fall, dass das mindestens eine Steuerventil, das von der ersten Steuereinheit über das elektrische Steuersignal, das über mindestens eine Steuerventil-Datenleitung, beispielsweise einen CAN-Bus, übertragen wird, elektronisch angesteuert wird, nicht angesteuert werden kann, beispielsweise aufgrund eines elektrischen Defekts bei der Signalübertragung, beispielsweise einem Fehler im CAN-Bus, auf die oder von der ersten Steuereinheit, kann über die zweite Steuereinheit eine elektrische Steuerung des Parkbremsventils sowie gleichzeitig des Bypass-Ventils in Abhängigkeit der Fahrzeug-Soll-Verzögerung ausgegeben werden. Dadurch kann die elektronisch-pneumatische Redundanz durch eine zusätzliche Ansteuerung des Bypass-Ventils erweitert werden.

Jedes Steuerventil ist hierbei einem Bremskreis des Fahrzeuges zugeordnet und steuert in dem jeweiligen Bremskreis Bremsdrücke an Radbremsen aus, wobei bei einer pneumatischen Ansteuerung des Steuerventils ein Bremsdruck in Abhängigkeit eines pneumatischen Steuerdruckes und bei einer elektronischen Ansteuerung des Steuerventils ein Bremsdruck in Abhängigkeit eines elektrischen Steuersignals an die Radbremsen des jeweiligen Bremskreises ausgesteuert wird.

Die Vorgabe des Steuerdruckes für das Steuerventil muss hierbei nicht für jeden Bremskreis über das Bypass-Ventil erfolgen. Beispielsweise kann einem ersten Steuerventil einer Vorderachse in einem ersten Bremskreis ein Bypass-Ventil zugeordnet sein und einem zweiten Steuerventil einer Hinterachse in einem zweiten Bremskreis kein Bypass-Ventil, so dass das zweite Steuerventil beispielsweise lediglich von der ersten Steuereinrichtung elektrisch und gemäß einer ersten Ausführungsform direkt von der Betätigungsvorrichtung auch pneumatisch angesteuert werden kann.

In dem jeweiligen Steuerventil kann über eine entsprechend integrierte Redundanzfunktion automatisch von einer elektronischen Ansteuerung zu einer pneumatischen Ansteuerung gewechselt werden, so dass das jeweilige Steuerventil im Redundanzfall nicht mehr durch die elektrischen Steuersignale sondern automatisch durch den vom zugeordneten Bypass-Ventil oder von der Betätigungsvorrichtung ausgesteuerten Steuerdruck gesteuert werden kann.

Die Betätigungsvorrichtung kann gemäß einer ersten Ausführungsform als eine pneumatische Betätigungseinrichtung, beispielsweise ein pneumatisches Bremsventil, ausgeführt sein. Das pneumatische Bremsventil ist ausgebildet, einen Bremsventil-Steuerdruck in Abhängigkeit einer Betätigung des Fußbremspedals an das Bypass-Ventil ausgegeben. Die zweite Steuereinheit kann gleichzeitig, insbesondere im Redundanzfall, in Abhängigkeit der automatisiert vorgegebenen Fahrzeug-Soll-Verzögerung elektrisch ein Bypass-Signal an das Bypass-Ventil ausgeben. Das Bypass-Ventil erzeugt durch eine Bypass-Elektronik intern einen der über das Bypass-Signal übertragenen Fahrzeug-Soll-Verzögerung entsprechenden Bypass-Steuerdruck.

Gemäß dieser Ausführungsform weist das dem jeweiligen Steuerventil zugeordnete Bypass-Ventil ein Select-High Ventil auf, das den höheren der beiden anliegenden Steuerdrücke, d.h. entweder den Bypass-Steuerdruck oder den Bremsventil-Steuerdruck auswählt und diesen an das diesem Bypass-Ventil zugeordnete Steuerventil aussteuert. Das jeweilige Steuerventil kann somit insbesondere im Redundanzfall einen Bremsdruck vorgeben, der entweder die Fahrzeug-Soll-Verzögerung oder die vom Fahrer vorgegebene Bremsanforderung umsetzt.

Betätigt der Fahrer im Redundanzfall während einer rein automatisierten Ansteuerung der Radbremsen in Abhängigkeit der Fahrzeug-Soll-Verzögerung auch das Bremspedal und ist die Betätigung so stark, dass der Bremsventil-Steuerdruck größer wird als der Bypass-Steuerdruck, so steuert das Bypass-Ventil den in dem Fall höheren Bremsventil-Steuerdruck als Steuerdruck an das Steuerventil aus; die automatisierte Bremsung wird somit überschrieben bzw. durch den Fahrer übersteuert. Der Fahrer kann also in den Bremsvorgang eingreifen, beispielsweise während einer Notbremssituation oder wenn er merkt, dass die redundante Bremsung fehlerhaft, beispielsweise nicht stark genug ist.

Das Bypass-Ventil kann in dem mindestens einen Steuerventil oder in dem pneumatischen Bremsventil bereits integriert sein, um vorteilhafterweise eine Druckübertragung über kurze Wege zu ermöglichen.

Das von der zweiten Steuereinheit gesteuerte Parkbremsventil ist in einem weiteren, unabhängigen Bremskreis direkt mit den Radbremsen verbunden, beispielsweise mit den Radbremsen an einer Hinterachse des Fahrzeuges sowie - falls vorhanden - auch eines Anhängers, so dass durch diese Radbremsen bei Vorliegen einer Verzögerungsanforderung durch die zweite Steuereinheit eine dementsprechende Bremsung bewirkt werden kann. Die Verzögerungsanforderung kann hierbei ebenfalls in Abhängigkeit der automatisiert angeforderten Fahrzeug-Soll-Verzögerung, einer automatisiert angeforderten Parkbremsung aber auch durch eine vom Fahrer aktivierte Parkbremsfunktion - im Stillstand oder während der Fahrt - vorgegeben werden, wobei die Verzögerungsanforderung dann aus einer vom Fahrer angeforderten Parkbremskraft bzw. Parkbrems-Vorgabe folgt.

Die Radbremsen der Hinterachse sowie des Anhängers können dazu beispielsweise kombinierte Betriebs- und Federspeicherbremszylinder aufweisen, so dass eine vom pneumatischen Bremsventil über ein Steuerventil, mit oder ohne zwischengeschaltetes Bypass-Ventil, und/oder eine vom Parkbremsventil direkt angeforderte Bremsung mit derselben Radbremse aber in unterschiedlichen Bremskreisen, in dem Fall also mit einer Parkbrems- und einer Betriebsbrems-Funktion, umgesetzt werden können.

Somit ist es erfindungsgemäß möglich, Radbremsen des Bremssystems über das jeweilige Steuerventil elektrisch-pneumatisch entweder über ein von der ersten Steuereinheit elektrisch vorgegebenes Steuersignal oder, insbesondere im Redundanzfall, über das von der zweiten Steuereinheit vorgegebene und vom Parkbremsventil und vom Bypass-Ventil umgesetzte elektrische Parkbrems-Signal bzw. Bypass-Signal anzusteuern, so dass eine elektronisch angeforderte Bremsung auf unterschiedliche Art und Weise pneumatisch umgesetzt werden kann und somit in zuverlässiger Weise eine Bremsung bewirkt werden kann.

Ob ein Defekt oder ein Ausfall in der ersten Steuereinheit vorliegt, wird beispielsweise von der zweiten Steuereinheit über ein Überwachungssignal festgestellt. Liegt ein Defekt oder ein Ausfall vor, wird über eine separate Datenleitung, beispielsweise über einen separaten CAN-Bus, die automatisiert vorgegebene Fahrzeug-Soll-Verzögerung von einer dritten Steuereinheit, die ausgebildet ist, die automatisierte Steuerung des Fahrzeuges zu übernehmen und insbesondere die Fahrzeug-Soll-Verzögerung vorzugeben, an die zweite Steuereinheit übertragen, so dass bei einem Ausfall der ersten Steuereinheit eine zuverlässige Übertragung der Fahrzeug-Soll-Verzögerung an die zweite Steuereinheit gewährleistet werden kann.

Die erste Steuereinheit und die zweite Steuereinheit sind dazu in separaten elektrischen Kreisen vorzugsweise mit jeweils einer Energieversorgung angeordnet, so dass bei einem Defekt in einem der elektrischen Kreise der andere elektrische Kreis nicht beeinträchtigt wird. Die dritte Steuereinheit wird von beiden elektrischen Kreisen mit Energie versorgt, so dass bei einem Ausfall eines elektrischen Kreises der jeweils andere elektrische Kreis die automatisiert vorgegebene Fahrzeug-Soll-Verzögerung von der dritten Steuereinrichtung abrufen kann. Somit kann die automatisiert angeforderte Bremsung zum Erreichen einer Fahrzeug-Soll-Verzögerung dennoch über einen der elektrischen Kreise bewirkt werden. Die Steuereinheiten können hierbei zumindest baulich auch zusammengefasst sein.

Mit dem erfindungsgemäßen elektronisch-pneumatischen Bremssystem können somit vorteilhafterweise mehrere Rückfallebenen bzw. Redundanzen für einen automatisierten Betrieb des Fahrzeuges ausgebildet werden, falls eine elektronische Ansteuerung der Steuerventile über das Steuersignal fehlschlägt:
Eine erste Rückfallebene bzw. Redundanz ist demnach durch die mechanische Betätigung des Bremspedals durch Drücken des Bremspedals durch den Fahrer gegeben, in dessen Abhängigkeit pneumatisch der Bremsventil-Steuerdruck und von dem jeweiligen Steuerventil mit oder ohne vorgeschaltetem Bypass-Ventil pneumatisch der dazu proportionale Bremsdruck an die Radbremsen des entsprechenden Bremskreises ausgesteuert wird, d. h. es wird eine mechanisch-pneumatische Redundanz ausgebildet, die im automatisierten Betrieb des Fahrzeuges im Redundanzfall vom Fahrer zu jedem Zeitpunkt aktiviert werden kann.

Ist der Fahrer unaufmerksam oder mit anderen Dingen beschäftigt oder fährt das Fahrzeug automatisiert ohne Fahrer oder befindet sich der Fahrer nicht am Fahrerplatz, wird eine zweite, elektronisch-pneumatische Rückfallebene bzw. Redundanz durch die von der zweiten Steuereinheit bewirkte elektrische Ansteuerung des Parkbremsventils und des Bypass-Ventils ausgebildet, die im automatisierten Betrieb des Fahrzeuges beispielsweise dann automatisch aktiviert werden kann, wenn bei der elektrischen Ansteuerung der Steuerventile ein Problem festgestellt wird und nicht bereits auf die erste, mechanisch-pneumatische Redundanz zurückgegriffen wurde.

Somit kann in einem automatisiert gesteuerten Fahrzeug im Redundanzfall von einer rein elektronischen Ansteuerung der jeweiligen Steuerventile auf eine elektronisch-pneumatische Ansteuerung über das Bypass-Ventil sowie das mindestens eine Steuerventil zurückgegriffen werden. Zusätzlich wird durch die Möglichkeit der direkten Ansteuerung der Radbremsen durch das Parkbremsventil eine Bremsung bewirkt, die sonst durch eine beispielsweise manuelle Aktivierung der Parkbremsfunktion durch den Fahrer erreicht wird.

Vorteilhafterweise können dadurch Kosten gespart werden, da für die Redundanzen im Wesentlichen auf im Fahrzeug vorhandene Komponenten zurückgegriffen wird. So kann in Fahrzeugen, in denen eine elektropneumatische Parkbremse im Fahrzeug bereits vorhanden ist, durch ein zusätzliches Bypass-Ventil sowie eine entsprechende zusätzliche elektronische Ansteuerung durch die zweite Steuereinheit, beispielsweise mit einer entsprechenden Software-Logik, in einfacher Weise eine elektronisch-pneumatische Redundanz insbesondere im automatisierten Betrieb des Fahrzeuges ausgebildet werden.

Zudem können durch das Aussteuern eines Bremsdruckes über das Steuerventil in Kombination mit der direkten Ansteuerung der Radbremsen durch das Parkbremsventil eine Bremswirkung sowie eine Bremskraftverteilung auf die Fahrzeugachsen im Redundanzfall optimiert werden, so dass eine sichere und zuverlässige Bremsung des Nutzfahrzeuges gewährleistet werden kann.

Falls kein Redundanzfall vorliegt, können sowohl das pneumatische Bremsventil als auch das Parkbremsventil in üblicher Weise im Fahrzeug verwendet werden. So kann das pneumatische Bremsventil mechanisch über das Bremspedal betätigt werden, um über die Steuerventile mit oder ohne vorgeschaltetem Bypass-Ventil die Radbremsen mit einem Bremsdruck zu versorgen. In gleicher Weise kann die übliche Funktion der Parkbremse umgesetzt werden, indem beispielsweise beim Abstellen des Fahrzeuges und bei aktivierter Parkbremsfunktion das Parkbremsventil einen entsprechenden Bremsdruck vorzugsweise an die Radbremsen der Hinterachse sowie - falls vorhanden - an die Bremsen eines Anhängers aussteuert. Weiterhin kann von der dritten Steuereinheit auch automatisiert eine Parkbremsung im Stillstand oder während der Fahrt des Fahrzeuges eingestellt werden. Somit wird vorteilhafterweise der herkömmliche Betrieb des Fahrzeuges durch die Ausbildung der zusätzlichen Redundanz nicht negativ beeinflusst.

Gemäß einer weiteren Ausführungsform kann als Betätigungsvorrichtung für den Fahrer eine rein elektrische Betätigungsvorrichtung vorgesehen sein, die in Abhängigkeit der Betätigung durch den Fahrer elektrisch ein Anforderungs-Signal insbesondere an die zweite Steuereinheit ausgibt. Das Anforderungs-Signal wird in der zweiten Steuereinheit in eine Fahrer-Verzögerung umgerechnet und diese mit der automatisiert vorgegebenen Fahrzeug-Soll-Verzögerung verglichen. Die höhere der beiden Verzögerungen wird über das Bypass-Signal an das Bypass-Ventil ausgegeben. Dieses erzeugt einen entsprechenden Bypass-Steuerdruck und steuert diesen als Steuerdruck an das zugeordnete Steuerventil aus. Somit wird die Select-High-Funktionalität bereits in der zweiten Steuereinheit beispielsweise über eine Software umgesetzt und das Select-High-Ventil im Bypass-Ventil kann entfallen. Eine Ansteuerung der Steuerventile im Fahrzeug erfolgt gemäß dieser Ausführungsform außerhalb des Redundanzfalles ausschließlich elektrisch.

Dadurch kann der Vorteil erreicht werden, dass eine Bremsanforderung durch den Fahrer nicht mehr über pneumatische Leitungen übertragen wird und die Select-High-Funktionalität zudem über eine Software bereitgestellt werden kann. Dadurch können Kosten und Aufwand gespart werden. Zudem steigt durch den Wegfall pneumatischer Leitungen die Zuverlässigkeit des redundant ansteuerbaren Bremssystems.

Somit sind in einem Bremssystem mit einer Parkbremse lediglich mindestens ein Bypass-Ventil mit oder ohne Select-High-Ventil nachzurüsten sowie eine intelligente Software-Steuerung ohne oder mit Select-High-Funktionalität insbesondere für den Redundanzfall. Dazu kann vorzugsweise auf der zweiten Steuereinheit, die das Parkbremsventil und das Bypass-Ventil ansteuert, eine entsprechende Software nachgerüstet werden, die bei Erkennen eines Defekts oder eines Ausfalls in der Elektronik der ersten Steuereinheit ein elektrisches Parkbrems-Signal erzeugt und damit das Parkbremsventil ansteuert sowie ein Bypass-Signal an das Bypass-Ventil übermittelt, die jeweils abhängig von der automatisiert vorgegebenen Fahrzeug-Soll-Verzögerung bzw. in der zweiten Ausführungsform abhängig von der Fahrer-Verzögerung sind. Mit der Software auf der zweiten Steuereinheit kann beispielsweise auch ein Blockieren der Räder sowie das Bypass-Ventil oder das Parkbremsventil überwacht_{[TL1]} werden, so dass im Redundanzfall von der zweiten Steuereinheit eine sichere und zuverlässige Steuerung der Bremsung erreicht werden kann. Die Software kann allerdings auch im Bypass-Ventil oder aber in der ersten oder dritten Steuereinheit angeordnet sein.

Somit können vorteilhafterweise mit einfach Mitteln und mit wenig Aufwand in einem vorhandenen elektronisch gesteuerten pneumatischen Bremssystem mindestens zwei Rückfallebenen, eine elektrisch-pneumatische und eine mechanisch-pneumatische Rückfallebene, ausgebildet werden.

Das Steuerventil ist beispielsweise als ein proportional steuerndes Relaisventil mit einem 3/2 Wegeventil oder als ein Achsmodulator ausgeführt, wobei das Relaisventil beispielsweise für einen ersten Bremskreis an der Vorderachse und der Achsmodulator für einen zweiten Bremskreis an der angetriebenen Hinterachse vorgesehen sein können. Beide Steuerventile können sowohl elektrisch (Normalbetrieb) als auch pneumatisch (Redundanzfall) angesteuert werden, wobei zur elektrischen Ansteuerung eine Elektronik im jeweiligen Steuerventil vorgesehen ist, um die elektrische Vorgabe über das Steuersignal in einen auszugebende Druck umzuwandeln. Alternativ können auch Achsmodulatoren an beiden Fahrzeugachsen, z.B. an der Vorderachse ein 1-Kanal-Achsmodulator und an der Hinterachse ein 2-Kanal-Achsmodulator verwendet werden. Beide Steuerventile ermöglichen es, insbesondere im Redundanzfall proportional zu einem anliegenden Steuerdruck, der beispielsweise vom jeweiligen Bypass-Ventil ausgesteuert wird, einen Bremsdruck an die Radbremsen des jeweiligen Bremskreises auszusteuern. Mit dieser Ausführung der Steuerventile kann das erfindungsgemäße pneumatische Bremssystem beispielsweise als ein EBS-Bremssystem ausgebildet sein.

Wird ein elektronisch steuerbares pneumatisches Bremssystem mit einer Antiblockier-Regelung verwendet, können als Steuerventile vorteilhafterweise lediglich elektrisch und pneumatisch ansteuerbare Relaisventile, beispielsweise mit integrierten, elektrisch steuerbaren 3/2-Wegeventilen, vorgesehen sein. Somit kann die erfindungsgemäße Redundanz mit denselben Vorteilen auch in einem Bremssystem mit Antiblockier-Regelung ausgebildet werden, indem bei einem Ausfall der elektronischen Ansteuerung des Steuerventils auf die pneumatische Ansteuerung des Steuerventils zurückgegriffen wird.

Somit können mit dem erfindungsgemäßen Bremssystem in einem elektronisch gesteuerten pneumatischen Bremssystem mit oder ohne Antiblockier-Regelung mit jeweils elektronisch angesteuerten Steuerventilen insbesondere eine elektrisch-pneumatische und eine mechanisch-pneumatische Rückfallebene ausgebildet werden, um die Radbremsen mit einem Bremsdruck zu versorgen, und somit bei einer automatisierten Bremsung auch in einem Bremsschlupffall reagieren zu können, wenn die elektronische Ansteuerung der Steuerventile über die erste Steuereinheit fehlschlägt. Ggf. können dann auch weitere redundante Sensoren zum Erkennen eines Bremsschlupffalls im Fahrzeug vorgesehen sein.

Das erfindungsgemäße pneumatische Bremssystem kann auch zur Ansteuerung von Radbremsen mit mehr als zwei Fahrzeugachsen vorgesehen sein, beispielsweise kann das Bremssystem für ein dreiachsiges Zugfahrzeug vorgesehen sein, wobei für die zusätzlichen Fahrzeugachsen weitere Bremskreise vorgesehen sein können oder die vorhandenen Bremskreise auch für die zusätzlichen Fahrzeugachsen verwendete werden. Die Ansteuerung zusätzlicher Bremskreise kann im Redundanzfall in entsprechender Weise beispielsweise über zusätzliche Bypass-Ventile erfolgen.

Weiterhin können auf derartige Weise auch Anhänger-Bremskreise in einem Anhänger elektrisch und pneumatisch gesteuert werden, wobei die Bremsanforderung elektronisch beispielsweise über eine Anhängerschnittstelle und pneumatisch über ein elektropneumatisches Anhängersteuerventil auf den Anhänger übertragen werden kann. Ein dem Anhänger-Bremskreis zugeordneter pneumatischer Anhänger-Steuerdruck kann dadurch von Anhänger-Steuerventilen in die entsprechenden Bremsdrücke umgesetzt werden, um auch im Anhänger-Bremskreis im Redundanzfall eine Bremsung bewirken zu können. Als Anhänger-Steuerdruck kann hierbei beispielsweise der Steuerdruck für einen der Bremskreise des Fahrzeuges, vorzugsweise des ersten Bremskreises an der Vorderachse, verwendet werden. Alternativ kann der Anhänger-Steuerdruck auch unabhängig von den anderen Bremskreisen vorgegeben werden.

Die Erfindung wird im Folgenden anhand der beiliegenden Zeichnung erläutert. Es zeigen:
- Fig. 1: ein Fahrzeug mit einem elektronisch gesteuerten pneumatischen Bremssystem (EBS) als Blockschaltbild;
- Fig. 2: ein Fahrzeug mit einem elektronisch gesteuerten pneumatischen Bremssystem als Blockschaltbild mit zwei Bypass-Ventilen;
- Fig. 3: ein Fahrzeug mit einem elektronisch gesteuerten pneumatischen Bremssystem als Blockschaltbild;
- Fig. 4: ein Fahrzeug mit einem doppelt-elektronisch (2e) gesteuerten pneumatischen Bremssystem als Blockschaltbild;
- Fig. 5a: eine Ausführungsform eines Bypass-Ventils; und
- Fig. 5b: eine alternative Ausführungsform des Bypass-Ventils zum Einsatz in einem Bremssystem gemäß Fig. 4.

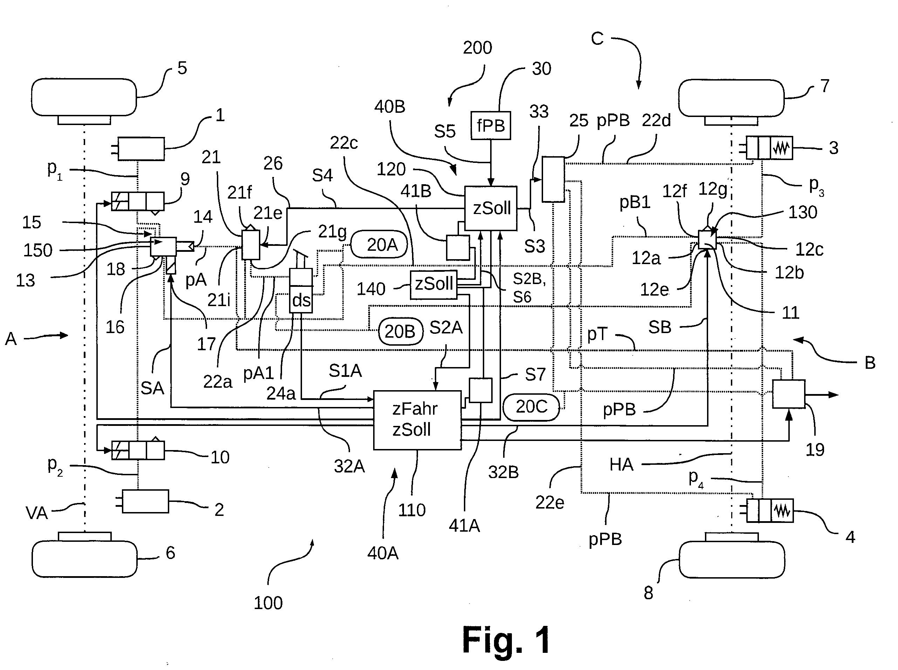

Die Ausführungsform gemäß Fig. 1 betrifft ein pneumatisches EBS-Bremssystem 100 in einem Nutzfahrzeug 200, das elektronisch gesteuert wird, mit Radbremsen 1, 2, 3, 4 an den Rädern 5, 6, 7, 8. Die Radbremsen 1, 2, 3, 4 werden gemäß der dargestellten Ausführungsform in drei Bremskreisen A, B, C angesteuert, wobei ein erster Bremskreis A die Radbremsen 1, 2 an den Rädern 5, 6 einer Vorderachse VA und ein zweiter und ein dritter Bremskreis B, C die Radbremsen 3, 4 an den Rädern 7, 8 einer Hinterachse HA betrifft.

Den Radbremsen 1, 2 des ersten Bremskreises A sind an den Rädern 5, 6 der Vorderachse VA jeweils herkömmliche ABS-Bremsventile 9, 10 zum Regeln eines Bremsdruckes p1, p2 in Abhängigkeit eines erkannten ABS-Schlupffalls vorgeschaltet. An den angetriebenen Rädern 7, 8 der Hinterachse HA ist den Radbremsen 3, 4 gemäß dieser Ausführungsform im zweiten Bremskreis B ein Achsmodulator 11 vorgeschaltet, der in bekannter Weise den an die einzelnen Radbremsen 3, 4 ausgesteuerten Bremsdruck p3, p4 elektronisch und pneumatisch regeln und dabei ebenfalls einen Schlupffall an den Hinterrädern 7, 8 berücksichtigen kann.

Elektronisch gesteuert werden der Achsmodulator 11 sowie die ABS-Bremsventile 9, 10 über eine erste Steuereinheit 110 (ECU). Es können aber auch separate Steuereinheiten für den Achsmodulator 11 und die ABS-Bremsventile 9, 10 vorgesehen sein, die die jeweiligen Ventile 9, 10, 11 einzeln ansteuern.

Der erste Bremskreis A weist als ein erstes Steuerventil ein Relaisventil 13 auf, das einen pneumatisch ausgeführten ersten Relaisventil-Steuereingang 14 und einen elektronisch ausgeführten zweiten Relaisventil-Steuereingang 17, Relaisventil-Arbeitsanschlüsse 15 sowie einen Relaisventil-Druckluftanschluss 16 aufweist. Die Relaisventil-Arbeitsanschlüsse 15 sind über Druckluftleitungen mit den beiden Radbremsen 1, 2 der Vorderachse VA verbunden. Der Relaisventil-Druckluftanschluss 16 verbindet das Relaisventil 13 mit einem ersten Druckvorratsbehälter 20A für den ersten Bremskreis A.

Über den zweiten Relaisventil-Steuereingang 17 kann dem Relaisventil 13 ein von der ersten Steuereinheit 110 ausgegebenes, über eine erste Bremsventil-Datenleitung 32A übertragenes Relaisventil-Steuersignal SA zur elektronischen Ansteuerung übergeben werden. Die Umsetzung der elektronischen Vorgabe SA kann beispielsweise über eine im Relaisventil 13 angeordnete Relaisventil-Elektronik 150 erfolgen, durch die im Relaisventil 13 angeordnete Ventile, beispielsweise 3/2-Wegeventile, angesteuert werden, um einen der elektronischen Vorgabe SA entsprechenden Druck zu erzeugen.

Zur pneumatischen Ansteuerung wird dem Relaisventil 13 über den ersten Relaisventil-Steuereingang 14 ein von einem Bypass-Ventil 21 ausgegebener Relaisventil-Steuerdruck pA vorgegeben, wobei der Relaisventil-Steuerdruck pA gemäß dieser Ausführungsform in Abhängigkeit einer Stellung des Bypass-Ventils 21 entweder von einer Betätigungsvorrichtung, beispielsweise einem pneumatischen Bremsventil 24a, insbesondere einem Fußbremsventil, durch eine manuelle Betätigung eines Bremspedals durch den Fahrer, oder durch eine zweite Steuereinheit 120, die insbesondere ein Parkbremsventil 25 elektronisch steuert, vorgegeben wird.

Das Relaisventil 13 steuert je nach anliegendem Relaisventil-Steuerdruck pA am ersten Relaisventil-Steuereingang 14 oder anliegendem Relaisventil-Steuersignal SA am zweiten Relaisventil-Steuereingang 17 die Bremsdrücke p1, p2 an die Radbremsen 1, 2 der Vorderachse VA aus, wobei das Relaisventil 13 die Druckluft aus dem ersten Druckvorratsbehälter 20A proportional zum Relaisventil-Steuerdruck pA bzw. in Abhängigkeit des vorgegebenen Relaisventil-Steuersignals SA an die Radbremsen 1, 2 der Vorderachse VA aussteuert. Über das Relaisventil 13 kann weiterhin in Abhängigkeit des Relaisventil-Steuerdruckes pA oder des Relaisventil-Steuersignales SA eine Entlüftung der Radbremsen 1, 2 der Vorderachse VA zum Drucksenken stattfinden, beispielsweise über einen Relaisventil-Entlüftungsanschluss 18.

Im ersten Steuerventil bzw. im Relaisventil 13 ist eine Redundanzfunktion integriert, mit der automatisch von der elektrischen Ansteuerung über das Relaisventil-Steuersignal SA auf eine pneumatische Ansteuerung über den Relaisventil-Steuerdruck pA zurückgegriffen werden kann, falls beispielsweise ein Defekt oder ein Ausfall der elektronischen Ansteuerung durch die erste Steuereinheit 110 vorliegt.

Für den zweiten Bremskreis B ist als zweites Steuerventil der Achsmodulator 11, vorzugsweise ein 2-Kanal-Achsmodulator, vorgesehen, der die Bremsdrücke p3, p4 pneumatisch unabhängig voneinander regelt und an die jeweilige Betriebsbremse 3, 4 ausgibt. Dazu wird in bekannter Weise ein an einem Achsmodulator-Druckluftanschluss 12a bereitgestellter pneumatischer Arbeitsdruck aus einem zweiten Druckvorratsbehälter 20B in entsprechender Höhe proportional an Achsmodulator-Arbeitsanschlüsse 12c bzw. 12b ausgesteuert, wobei ein erster Achsmodulator-Arbeitsanschluss 12c über Druckluftleitungen mit der rechten Hinterradbremse 3 verbunden ist und ein zweiter Achsmodulator-Arbeitsanschluss 12b mit der linken Hinterradbremse 4. Über einen Achsmodulator-Entlüftungsanschluss 12g kann der entsprechende Bremsdruck p3 bzw. p4 durch eine Entlüftung verringert werden.

Die Vorgabe zum Druckerhöhen, Druckhalten oder Drucksenken an der Hinterachse HA kann von einer im Achsmodulator 11 integrierten Achsmodulator-Elektronik 130 gesteuert werden, wobei die erste Steuereinheit 110 dazu über eine zweite Bremsventil-Datenleitung 32B und einen ersten Achsmodulator-Steuereingang 12e elektronisch ein Achsmodulator-Steuersignal SB vorgibt, das den vom Achsmodulator 11 auszusteuernden Bremsdruck p3, p4 bestimmt, so dass beispielsweise eine von einer dritten Steuereinheit 140 automatisiert vorgegebene Fahrzeug-Soll-Verzögerung zSoll umgesetzt oder auf einen ABS-Bremsschlupffalls reagiert werden kann.

Im zweiten Steuerventil bzw. im Achsmodulator 11 ist wie auch im ersten Steuerventil bzw. im Relaisventil 13 eine Redundanzfunktion integriert, mit der automatisch von der elektrischen Ansteuerung über das Achsmodulator-Steuersignal SB auf eine pneumatische Ansteuerung über einen an einem zweiten Achsmodulator-Steuereingang 12f vorherrschenden Bremsventil-Achsmodulator-Steuerdruck pB1 zurückgegriffen werden kann. Die Redundanzfunktion kann beispielsweise verwendet werden, falls ein Defekt oder ein Ausfall der elektronischen Ansteuerung durch die erste Steuereinheit 110 oder in der Achsmodulator-Elektronik 130 oder bei der Übertragung des Achsmodulator-Steuersignals SB von der ersten Steuereinheit 110 auf die Achsmodulator-Elektronik 130 festgestellt wurde. Der Bremsdruck p3, p4 wird somit nicht mehr in Abhängigkeit des elektrisch vorgegebenen Achsmodulator-Steuersignals SB ausgegeben, sondern in Abhängigkeit des an dem zweiten Achsmodulator-Steuereingang 12f vorherrschenden Bremsventil-Achsmodulator-Steuerdrucks pB1, der gemäß dieser Ausführungsform von dem pneumatischen Bremsventil 24a vorgegeben wird.

Das pneumatische Bremsventil 24a steuert hierbei Bremsventil-Steuerdrücke pA1, pB1 proportional zu einem vom Fahrer durch Betätigung eines Bremspedals vorgegebenen Betätigungsweg ds aus, wobei die Betätigung bzw. der Betätigungsweg ds beispielsweise in der ersten Steuereinheit 110 in eine Verzögerungsanforderung, die im Folgenden als Fahrer-Verzögerung zFahr bezeichnet wird, umgerechnet werden kann. Für den ersten Bremskreis A wird vom pneumatischen Bremsventil 24a über eine erste Druckluftleitung 22a ein Bremsventil-Relaisventil-Steuerdruck pA1 an das Bypass-Ventil 21 ausgesteuert und für den zweiten Bremskreis B über eine dritte Druckluftleitung 22c der Bremsventil-Achsmodulator-Steuerdruck pB1 an den Achsmodulator 11. An das Relaisventil 13 kann die Betätigung durch den Fahrer über das Relaisventil-Steuersignal SA in Form der in der ersten Steuereinheit 110 umgerechneten Fahrer-Verzögerung zFahr übertragen werden. Der Achsmodulator 11 wird entsprechend mit der über das Achsmodulator-Signal SB übertragenen Fahrer-Verzögerung zFahr elektrisch angesteuert.

Das elektronisch gesteuerte Parkbremsventil 25 steuert Parkbremsventil-Steuerdrücke pPB an den dritten Bremskreis C in Abhängigkeit einer elektronisch über ein Parkbrems-Signal S3 vorgegebenen Anforderung aus, wobei dazu über eine vierte und eine fünfte Druckluftleitung 22d, 22e jeweils der Parkbremsventil-Steuerdruck pPB direkt an die Radbremsen 3, 4 der Hinterachse HA ausgegeben wird. Die elektronisch vorgegebene Anforderung wird dem Parkbremsventil 25 hierbei über das Parkbrems-Signal S3 von der zweiten Steuereinheit 120 elektronisch über eine Parkbrems-Datenleitung 33 übermittelt. Die zweite Steuereinheit 120 ist hierbei vorzugsweise im Parkbremsventil 25 integriert, so dass die Übermittlung auch entfallen kann und die zweite Steuereinheit 120 direkt die Steuerung des Parkbremsventils 25 in Abhängigkeit des Parkbrems-Signals S3 übernimmt. Diese Anforderung kann beispielsweise eine von einer Parkbremsfunktion 30 durch den Fahrer vorgegebenen Parkbrems-Vorgabe fPB repräsentieren oder im Redundanzfall die von der dritten Steuereinheit 140 an die zweite Steuereinheit 120 übertragene Fahrzeug-Soll-Verzögerung zSoll sein, so dass die Fahrzeug-Soll-Verzögerung zSoll im Redundanzfall zumindest teilweise auch von dem Parkbremsventil 25 über den dritten Bremskreis C umgesetzt werden kann.

Um auch die Radbremsen 1, 2 der Vorderachse VA in Abhängigkeit der von der zweiten Steuereinheit 120 vorgegebenen Anforderung, insbesondere der automatisiert vorgegebenen Fahrzeug-Soll-Verzögerung zSoll, betätigen zu können, wird von dieser gleichzeitig über eine Bypass-Signalleitung 26 ein die Fahrzeug-Soll-Verzögerung zSoll repräsentierendes Bypass-Signal S4 elektronisch an das Bypass-Ventil 21 übertragen.

Der Relaisventil-Steuerdruck pA für das Relaisventil 13 im ersten Bremskreis A kann somit im Redundanzfall gemäß der Ausführungsform in Fig. 1 von diesem dem ersten Bremskreis A zugeordneten Bypass-Ventil 21 folgendermaßen ausgegeben werden:
Das Bypass-Ventil 21 ist pneumatisch über die erste Druckluftleitung 22a mit dem pneumatischen Bremsventil 24a und elektrisch über die Bypass-Signalleitung 26 mit der das Parkbremsventil 25 steuernden zweiten Steuereinheit 120 verbunden. Das Bypass-Ventil 21 weist ein sog. Select-High-Ventil 21j auf und funktioniert derartig, dass es einen Relaisventil-Steuerdruck pA aussteuert, der entweder die über das elektrische Bypass-Signal S4, das die Fahrzeug-Soll-Verzögerung zSoll überträgt, oder den pneumatischen Bremsventil-Relaisventil-Steuerdruck pA1, der durch die angeforderte Fahrer-Verzögerung zFahr charakterisiert wird, umsetzt.

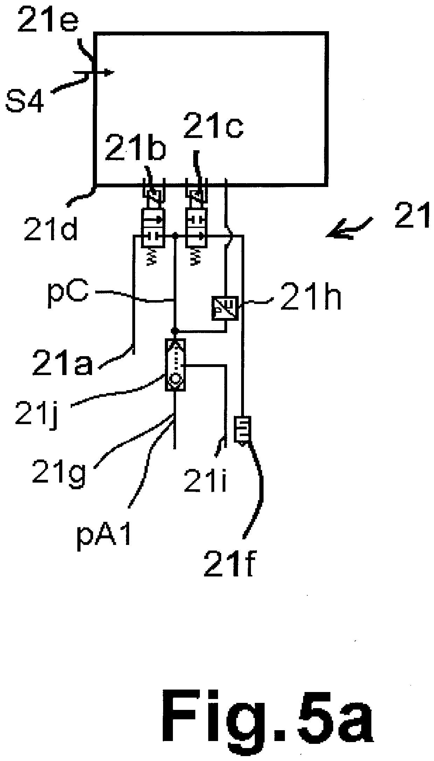

Das Bypass-Ventil 21 kann dazu wie in Fig. 5a dargestellt ausgeführt sein. Demnach weist das Bypass-Ventil 21 einen Bypass-Druckluftanschluss 21a auf, über den das Bypass-Ventil 21 an den ersten Druckvorratsbehälter 20A für den ersten Bremskreis A angeschlossen ist und darüber mit Druckluft versorgt werden kann.

Mit einem Einlassventil 21b und einem Auslassventil 21c kann eine elektrische Ansteuerung über die Bypass-Elektronik 21d im Bypass-Ventil 21 stattfinden, wobei je nach anliegendem Bypass-Signal S4 und somit angeforderter Fahrzeug-Soll-Verzögerung zSoll an einem ersten Bypass-Steuereingang 21e das Einlassventil 21b für ein Druckerhöhen oder das Auslassventil 21c für ein Drucksenken geöffnet werden oder für ein Druckhalten beide Ventile 21b, 21c geschlossen werden. Bei einem Drucksenken wird über einen Bypass-Entlüftungsanschluss 21f entlüftet. Durch das Einlassventil 21b und das Auslassventil 21c wird somit ein Bypass-Steuerdruck pC eingestellt, der durch die Höhe der Fahrzeug-Soll-Verzögerung zSoll charakterisiert ist. Pneumatisch kann das Bypass-Ventil 21 über einen zweiten Bypass-Steuereingang 21g angesteuert werden, über den der Bremsventil-Relaisventil-Steuerdruck pA1 aufgenommen wird.

Der Bypass-Steuerdruck pC sowie der Bremsventil-Relaisventil-Steuerdruck pA1 werden an ein Select-High-Ventil 21j im Bypass-Ventil 21 geleitet, das lediglich den höheren der beiden Steuerdrücke pC, pA1 ausgibt. Das Select-High-Ventil 21j ist hierbei beispielsweise als ein Doppelrückschlagventil ausgeführt. Der höhere der beiden Steuerdrücke pC, pA1 wird anschließend als Relaisventil-Steuerdruck pA an einen Bypass-Ausgang 21i, der mit dem Relaisventil 13 verbunden ist, weitergeleitet.

Um den Relaisventil-Steuerdruck pA oder den Bremsventil-Relaisventil-Steuerdruck pA1über einen kürzeren Weg übertragen zu können, kann das Bypass-Ventil 21 auch direkt in dem Relaisventil 13 oder aber im pneumatischen Bremsventil 24a angeordnet sein.

Die Räder 7, 8 der Hinterachse HA können über die Radbremsen 3, 4 gesteuert durch das Parkbremsventil 25 (dritter Bremskreis C) und/oder gesteuert durch das pneumatische Bremsventil 24a (zweiter Bremskreis B) abgebremst werden, wobei ein Abbremsen durch das Parkbremsventil 25 direkt und durch das pneumatische Bremsventil 24a über den Achsmodulator 11 erfolgt. Die Radbremsen 3, 4 der Hinterachse HA können dazu vorzugsweise als kombinierte Betriebs- und Federspeicherzylinder ausgeführt sein, so dass die Räder 7, 8 der Hinterachse HA über den vom Achsmodulator 11 ausgegebenen Bremsdruck p3, p4 und/oder über den vom Parkbremsventil 25 vorgegebenen Parkbremsventil-Steuerdruck pPB abgebremst werden können.

Zum Bereitstellen des Bremsventil-Relaisventil-Steuerdruckes pA1 und des Bremsventil-Achsmodulator-Steuerdruckes pB1 ist das pneumatische Bremsventil 24a an die Druckvorratsbehälter 20A, 20B angekoppelt, die für den jeweiligen Bremskreis A, B Druckluft zur Verfügung stellen. Das Parkbremsventil 25 ist mit einem dritten Druckvorratsbehälter 20C verbunden, so dass für den dritten Bremskreis C der Parkbremsventil-Steuerdruck pPB vorgegeben werden kann. Weiterhin ist ein Anhänger-Steuerventil 19 vorgesehen, das ebenfalls über den dritten Druckvorratsbehälter 20C mit Druckluft versorgt wird und dem Abbremsen eines hier nicht dargestellten Anhängers dient.

Die Steuerung des elektronischen Bremssystems 100 kann hierbei folgendermaßen stattfinden:
Da es sich gemäß Fig. 1 um ein elektronisch gesteuertes, pneumatisches Bremssystem 100 (EBS-Bremssystem) handelt, werden das Relaisventil 13 und der Achsmodulator 11 im normalen Betrieb des Fahrzeuges 200 elektrisch von der ersten Steuereinheit 110 angesteuert, indem dem Relaisventil 13 über den zweiten Relaisventil-Steuereingang 17 elektrisch das Relaisventil-Steuersignal SA übermittelt wird, das dann einen entsprechenden Bremsdruck p1, p2 an die Radbremsen 1, 2 der Vorderachse VA aussteuert. Dem Achsmodulator 11 wird über den ersten Achsmodulator-Steuereingang 12e elektrisch das Achsmodulator-Steuersignal SB übermittelt, das dann gemäß obigen Ausführungen den entsprechenden Bremsdruck p3, p4 an den Radbremsen 3, 4 der Hinterachse HA einstellt.

Vorgegeben werden das Relaisventil-Steuersignal SA bzw. das Achsmodulator-Steuersignal SB vorzugsweise von der ersten Steuereinheit 110 über die erste und zweite Bremsventil-Datenleitung 32A, 32B. Die erste Steuereinheit 110 ermittelt die Steuersignale SA, SB dabei entweder in Abhängigkeit der von der dritten Steuereinheit 140 vorgegebenen Fahrzeug-Soll-Verzögerung zSoll, wobei die dritte Steuereinheit 140 einem gesteuerten elektronischen Regelsystem zugeordnet ist, das ausgebildet ist, das Fahrzeug 200 automatisiert zu steuern, oder aber in Abhängigkeit des vom pneumatischen Bremsventil 24a durch eine manuelle Betätigung durch den Fahrer vorgegebenen Betätigungsweges ds, der in der ersten Steuereinheit 110 in die Fahrer-Verzögerung zFahr umgerechnet wird. Die erste Steuereinheit 110 erzeugt dazu aus einem den Betätigungsweg ds übertragenden ersten Betätigungs-Signal S1A des pneumatischen Bremsventils 24a und/oder aus einem die Fahrzeug-Soll-Verzögerung zSoll übertragenden ersten Anforderungs-Signal S2A der dritten Steuereinheit 140 das entsprechende Relaisventil-Steuersignal SA für den ersten Bremskreis A und das Achsmodulator-Steuersignal SB für den zweiten Bremskreis B zum Bewirken der entsprechenden Verzögerung zSoll, zFahr.

Bei einem Ausfall der Elektronik, d. h. für den Fall, dass das erste Betätigungs-Signal S1A und/oder das erste Anforderungs-Signal S2A von der ersten Steuereinheit 110 nicht mehr empfangen werden können oder von der ersten Steuereinheit 110 kein Relaisventil-Steuersignal SA und/oder Achsmodulator-Steuersignal SB ausgeben werden kann oder das Relaisventil-Steuersignal SA und/oder das Achsmodulator-Steuersignal SB fehlerhaft sind und somit das Relaisventil 13 und/oder den Achsmodulator 11 nicht mehr zuverlässig auf elektronischem Wege angesteuert werden können, wird auf eine Rückfallebene zurückgegriffen, um die Radbremsen 1, 2, 3, 4 dennoch ansteuern zu können.

Dazu wird zunächst das Relaisventil 13 bzw. der Achsmodulator 11 nur noch pneumatisch über den anliegenden Relaisventil-Steuerdruck pA bzw. den Bremsventil-Achsmodulator-Steuerdruck pB1 angesteuert, um die Bremsdrücke p1, p2, p3, p4 an die Radbremsen 1, 2, 3, 4 auszusteuern. Somit wird für die Ansteuerung der entsprechenden Steuerventile 11, 13 von den elektronischen Steuereingängen 17, 12e auf die pneumatischen Steuereingänge 14, 12f des jeweiligen Steuerventils 11, 13 umgeschaltet. Dies geschieht beispielsweise durch entsprechende federvorgespannte Redundanzventile im entsprechenden Steuerventil 11, 13, so dass bei einem Ausfall der Elektronik automatisch mechanisch von einer elektronischen Ansteuerung auf eine pneumatische Ansteuerung umgeschaltet werden kann.

Welche Bremswirkung durch die Radbremsen 1, 2, 3, 4 im Redundanzfall durchgesetzt wird, ist insbesondere abhängig davon, auf welche Rückfallebene bzw. welche redundante Ansteuerung zurückgegriffen wird:
Wird im Redundanzfall das pneumatische Bremsventil 24a nicht betätigt, so erfolgt eine Ansteuerung der Radbremsen 1, 2, 3, 4 in einer zweiten elektronisch-pneumatischen Rückfallebene lediglich in Abhängigkeit des von der zweiten Steuereinheit 120 erzeugten Parkbrems-Signals S3 sowie des Bypass-Signals S4. Dazu wird von der dritten Steuereinheit 140 das Anforderungs-Signal S2, das die Fahrzeug-Soll-Verzögerung zSoll überträgt, über ein zweites Anforderungs-Signal S2B auf die zweite Steuereinheit 120 übertragen, die in Abhängigkeit davon das Parkbrems-Signal S3 erzeugt damit das Parkbremsventil 25 steuert. Ergänzend wird in Abhängigkeit von der Fahrzeug-Soll-Verzögerung zSoll in der zweiten Steuereinheit 120 das Bypass-Signal S4 erzeugt und an das Bypass-Ventil 21 übertragen. Die zweite Steuereinheit 120 kann hierbei über ein Überwachungs-Signal S7 die erste Steuereinheit 110 abfragen, ob ein Ausfall oder ein Defekt in der Elektronik vorliegt und daraufhin entsprechend reagieren.

Im Parkbremsventil 25 wird in Abhängigkeit vom Parkbrems-Signal S3 der Parkbremsventil-Steuerdruck pPB über die vierte und die fünfte Druckluftleitung 22d, 22e an die Radbremsen 3, 4 der Hinterachse HA ausgegeben und somit direkt eine Bremsung umgesetzt. Ergänzend wird über die Bypass-Signalleitung 26 das Bypass-Signal S4 an das Bypass-Ventil 21 übertragen. Da das pneumatische Bremsventil 24a nicht betätigt wird, ist der Bremsventil-Relaisventil-Steuerdruck pA1 annähernd null, so dass vom Bypass-Ventil 21 der Bypass-Steuerdruck pC, der in Abhängigkeit der Fahrzeug-Soll-Verzögerung zSoll vorgegeben wird, als Relaisventil-Steuerdruck pA zum Relaisventil 13 ausgesteuert wird. Das Relaisventil 13 wird infolge dessen einen zum Relaisventil-Steuerdruck pA proportionalen Bremsdruck p1, p2 an die Radbremsen 1, 2 der Vorderachse VA aussteuern, um die von der zweiten Steuereinheit 120 bzw. der dritten Steuereinheit 140 automatisiert angeforderte Fahrzeug-Soll-Verzögerung zSoll zu bewirken.

Die ersten Steuereinheit 110 und die zweite Steuereinheit 120 können hierbei elektrisch voneinander getrennt betrieben werden, wobei für die erste Steuereinheit 110 ein erster elektrischer Kreis 40A und für die zweite Steuereinheit 120 ein zweiter elektrischer Kreis 40B vorgesehen ist. Über eine erste Energieversorgung 41A können die erste sowie die zweite Steuereinheit 110, 120 mit Energie versorgt werden und an eine zweite Energieversorgung 41B ist lediglich die zweite Steuereinheit 120 angeschlossen, so dass im Fall eines elektronischen Defekts in der ersten Energieversorgung 41A der zweite elektrische Kreis 40B mit der zweiten Steuereinheit 120 weiterhin seine Funktionen redundant ausführen kann.

Die dritte Steuereinheit 140, die insbesondere im automatisierten Betrieb die Fahrzeug-Soll-Verzögerung zSoll über das erste bzw. das zweite Anforderungs-Signal S2A, S2B für die erste und die zweite Steuereinheit 110, 120 vorgibt, ist sowohl mit der ersten als auch mit der zweiten Energieversorgung 41A, 41B verbunden, so dass diese bei einem Ausfall des ersten elektrischen Kreises 40A oder bei einem Ausfall des zweiten elektrischen Kreises 40B in beiden Fällen mit Energie versorgt werden kann. Die jeweiligen Datenleitungen 32A, 32B, 33, 26, die beispielsweise als Bus-System, insbesondere CAN-Bus ausgeführt sind, sind in dem der jeweiligen Steuereinheit 110, 120 zugeordneten Kreis 40A, 40B angeordnet, so dass bei einem Defekt auch eine Datenübertragung sichergestellt ist.

Liegt im Redundanzfall gleichzeitig eine Betätigung des pneumatischen Bremsventils 24a vor, beispielsweise durch eine mechanische Betätigung durch den Fahrer, beispielsweise in einer Notbremssituation, oder über eine elektronisch gesteuerte mechanische Betätigung des Bremspedals ist für die Radbremsen 1, 2 der Vorderachse VA entscheidend, ob der Bremsventil-Relaisventil-Steuerdruck pA1 oder der Bypass-Steuerdruck pC, der durch die Fahrzeug-Soll-Verzögerung zSoll bestimmt wird, höher ist, d.h. ob durch die Betätigung des Bremspedals oder durch die automatisierte Vorgabe eine höhere Verzögerung zFahr, zSoll vorgegeben wird. Je nachdem wird der Bremsdruck p1, p2 für die Radbremsen 1, 2 der Vorderachse VA durch das Relaisventil 13 in Abhängigkeit der Vorgabe von der zweiten Steuereinheit 120 oder in Abhängigkeit der Vorgabe des pneumatischen Bremsventils 24a ausgesteuert.

Gleichzeitig erfolgt bei einer Betätigung des pneumatischen Bremsventils 24a auch eine Ansteuerung des Achsmodulators 11 und darüber eine Ausgabe eines dazu proportionalen Bremsdruckes p3, p4 an die Radbremsen 3, 4 der Hinterachse HA. Weiterhin steuert das Parkbremsventil 25 die Radbremsen 3, 4 der Hinterachse HA mit einem von der Fahrzeug-Soll-Verzögerung zSoll abhängigen Parkbremsventil-Steuerdruck pPB an, so dass je nach Ausführung der hinteren Radbremsen 3, 4, beispielsweise mit kombinierten Betriebsbrems- und Federspeicherzylindern, eine Bremskraftaddition der Bremsdrücke p3 mit pPB bzw. p4 mit pPB an den jeweiligen Radbremsen 3, 4 stattfindet.

Somit kann bei einem Ausfall oder einem Defekt in der Elektronik des Relaisventils 13 und/oder des Achsmodulators 11 oder der Signalverbindung, beispielsweise einem CAN-Fehler, von der oder zu der ersten Steuereinheit 110 eine von der zweiten bzw. der dritten Steuereinheit 120, 140 elektronisch vorgegebene Fahrzeug-Soll-Verzögerungen zSoll durchgesetzt werden, indem die hinteren Radbremsen 3, 4 und die vorderen Radbremsen 1, 2 über das Parkbremsventil 25 bzw. das Bypass-Ventil 21 gesteuert von der zweiten Steuereinheit 120 betätigt werden können. Gibt der Fahrer zusätzlich einen Bremswunsch vor, indem er das Bremspedal beispielsweise in einer Notbremssituation betätigt, wird die elektronische Bremsanforderung gemäß dieser Ausführungsform zumindest an der Vorderachse VA übersteuert, falls diese Bremsanforderung höher ist.

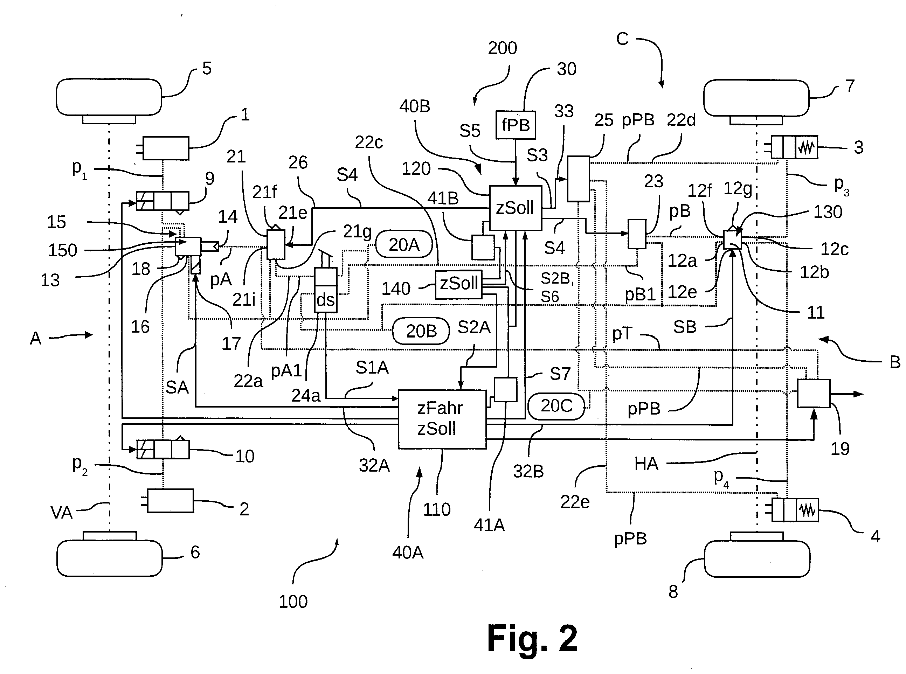

Gemäß Fig. 2 kann ergänzend ein zweites Bypass-Ventil 23 vorgesehen sein, das in analoger Weise wie das erste Bypass-Ventil 21 funktioniert. Demnach wird ein Achsmodulator-Steuerdruck pB an den Achsmodulator 11 durch das zweite Bypass-Ventil 23 vorgegeben, wobei der Achsmodulator-Steuerdruck pB entweder in Abhängigkeit der vom Bypass-Signal S4 vorgegebenen Fahrzeug-Soll-Verzögerung zSoll oder in Abhängigkeit vom Bremsventil-Achsmodulator-Steuerdruck pB1 ausgesteuert wird, je nachdem, wer die höhere Verzögerungsanforderung zSoll, zFahr vorgibt. Dadurch kann auch über den Achsmodulator 11 eine von der zweiten Steuereinheit 120 vorgegebene Fahrzeug-Soll-Verzögerung zSoll an die hinteren Radbremsen 3, 4 ausgesteuert werden. Dadurch kann die Bremskraftverteilung sowie die Bremswirkung im Redundanzfall weiter verbessert werden.

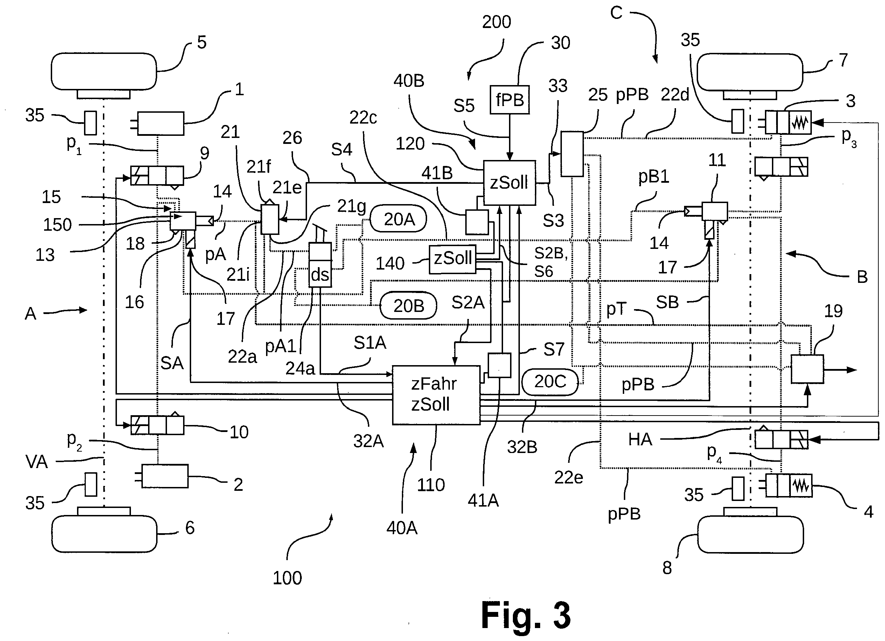

Alternativ kann wie in Fig. 3 dargestellt das Bremssystem 100 als ein elektronisch gesteuertes pneumatisches Bremssystem 100 ausgeführt sein, das an beiden Fahrzeugachsen VA, HA jeweils ABS-Bremsventile 9, 10 sowie Raddrehzahlsensoren 35 aufweist, um einen Bremsschlupf an allen vier Rädern 5, 6, 7, 8 erkennen und darauf reagieren zu können. Über die Steuerventile 11, 13 wird jeweils ein Bremsdruck p1, p2, p3, p4 an den Radbremsen 1, 2, 3, 4 bereitgestellt, wobei dieser durch die ABS-Bremsventile 9, 10 in einem in Abhängigkeit der Raddrehzahlsensoren 35 erkannten Bremsschlupffall gehalten oder verringert werden kann. Die beiden Steuerventile 11, 13 sind gemäß dieser Ausführung jeweils als Relaisventile mit jeweils einem 3/2-Wegeventil ausgeführt, so dass sowohl eine elektronische Ansteuerung über den elektronischen Relaisventil-Steuereingang 17 als auch eine pneumatische Ansteuerung über den pneumatischen Relaisventil-Steuereingang 14 ermöglicht wird.

Der pneumatische Relaisventil-Steuereingang 14 ist hierbei als ein 3/2-Wegeventil ausgeführt, das je nach vorliegendem Steuersignal SA, SB einen entsprechenden Druck in das Relaisventil 11, 13 einlässt. Können die Steuerventile 11, 13 über die Steuersignale SA, SB nicht mehr angesteuert werden, so wird entsprechend dem Bremssystem 100 in den Figuren 1 und 2 ein pneumatischer Steuerdruck pA und ggf. pB an dem pneumatischen Relaisventil-Steuereingang 14 eingestellt.

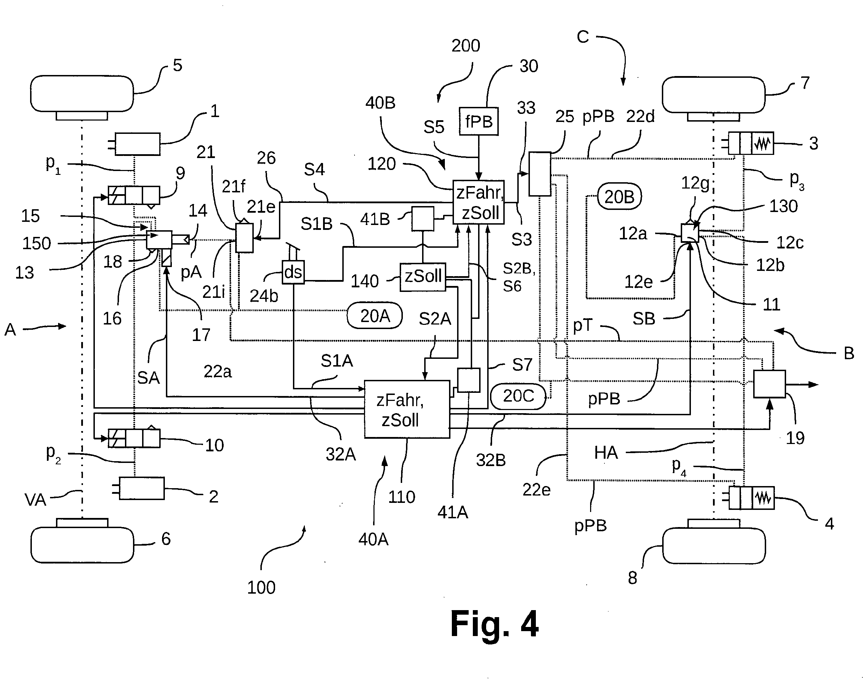

Gemäß Fig. 4 ist statt einem pneumatischen Bremsventil 24a als Betätigungsvorrichtung eine elektrische Betätigungsvorrichtung 24b vorgesehen, die in Abhängigkeit des Betätigungsweges ds, der durch das Betätigen des Bremspedals durch den Fahrer vorgegeben wird, lediglich elektrische Anforderungs-Signale S1A, S1B erzeugt. Die pneumatische Aussteuerung eines Steuerdruckes durch die Betätigungsvorrichtung 24b entfällt somit gemäß dieser Ausführungsform. Das erste Anforderungs-Signal S1A wird an die erste Steuereinheit 110 übermittelt, die daraus die Fahrer-Verzögerung zFahr berechnet um darüber die entsprechenden Steuersignale SA, SB für den jeweiligen Bremskreis A, B vorzugeben. Darüber werden die Steuerventile 11, 13 elektrisch angesteuert.

Bei einem Ausfall der Elektronik in der ersten Steuereinheit 110 wird im Redundanzfall die Bremsanforderung durch die zweite Steuereinheit 120 redundant vorgegeben, wobei die Vorgabe entweder in Abhängigkeit der automatisiert vorgegebenen Fahrzeug-Soll-Verzögerung zSoll oder in Abhängigkeit der aus dem Betätigungsweg ds folgenden Fahrer-Verzögerung zFahr, die in der zweiten Steuereinheit 120 berechnet wird, erfolgt. Die Betätigung bzw. der Betätigungsweg ds wird hierbei über ein zweites Anforderungs-Signal S1B von der elektrischen Betätigungsvorrichtung 24b auf die zweite Steuereinheit 120 übertragen und daraus die Fahrer-Verzögerung zFahr ermittelt. Die zweite Steuereinheit 120 prüft dann, ob die Fahrer-Verzögerung zFahr oder die Fahrzeug-Soll-Verzögerung zSoll größer ist. Die höhere der beiden Verzögerungen zSoll, zFahr wird über das Bypass-Signal S4 an das Bypass-Ventil 21 und über das Parkbrems-Signal S3 an das Parkbremsventil 25 elektronisch übermittelt, die dann einen entsprechenden Relaisventil-Steuerdruck pA für den ersten Bremskreis A bzw. Parkbrems-Steuerdruck pPB für den dritten Bremskreis C aussteuern.

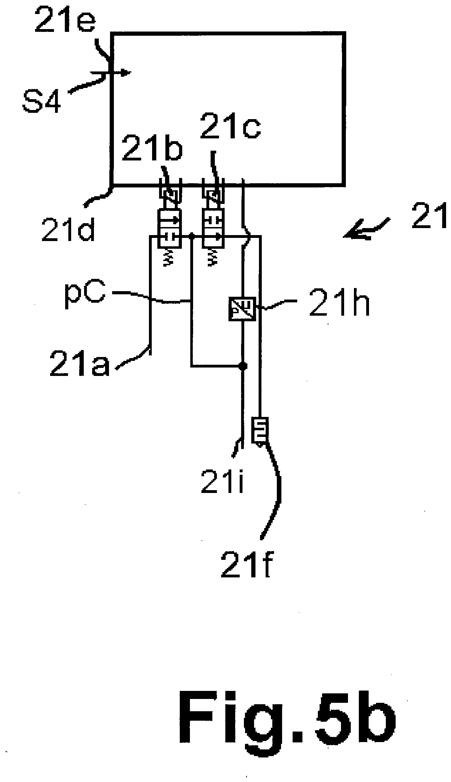

Das Bypass-Ventil 21 für diese Ausführungsform weist gemäß Fig. 5b im Gegensatz zu der Ausführung in Fig. 5a kein Select-High-Ventil 21j auf, da die Entscheidung der höheren Verzögerung zFahr, zSoll bereits in der zweiten Steuereinheit 120 gefällt wurde. Weiterhin ist kein pneumatischer Eingang 21g vorhanden. Demnach ist lediglich ein Einlass-Ventil 21b und ein Auslassventil 21c vorgesehen, die je nach anliegendem Bypass-Signal S4 gesteuert von der Bypass-Elektronik 21d den Bypass-Steuerdruck pC erzeugen, der dann als Relaisventil-Steuerdruck pA an den Bypass-Ausgang 21i ausgeben wird.

Damit wird in Fig. 4 ein doppelt elektronisch gesteuertes Bremssystem vorgeschlagen, das sowohl von der dritten Steuereinheit 140 für den automatisierten Betrieb als auch von der elektrischen Betätigungsvorrichtung 24b eine elektrische Vorgabe zSoll, ds erhält, die dann elektrisch-pneumatisch durch die Radbremsen 1, 2, 3, 4 umgesetzt wird.

In allen Ausführungsformen ist weiterhin ein Anhänger-Steuerventil 19 vorgesehen, das einen anliegenden Anhänger-Steuerdruck pT ausgeben kann, um Radbremsen eines Anhängers auch im Redundanzfall ansteuern zu können. Der Anhänger-Steuerdruck pT wird hierbei im Redundanzfall beispielsweise durch den im ersten Bremskreis A ausgesteuerten Relaisventil-Steuerdruck pA vorgegeben.

Liegt kein Redundanzfall vor, wird der Anhänger im Stillstand über das Parkbremsventils 25 angesteuert, wobei die Ansteuerung in Abhängigkeit der Parkbrems-Vorgabe fPB beispielsweise durch Aktivierung einer Parkbremsfunktion 30 durch den Fahrer im Stillstand vorgegeben wird. Im Falle einer Aktivierung der Parkbremsfunktion 30 im Stillstand des Fahrzeuges 200 wird der Parkbremsventil-Steuerdruck pPB über die vierte und die fünfte Druckluftleitung 22d, 22e ebenfalls den Radbremsen 3, 4 an der Hinterachse HA des Fahrzeuges 200 zugeführt, so dass ein sicheres Abstellen des Fahrzeuges 200 sowie des Anhängers in einer Parksituation gewährleistet werden kann. Die zweite Steuereinheit 120 gibt in dem Fall lediglich eine Bremsanforderung an das Parkbremsventil 25 aus, so dass die vom Fahrer vorgegebene Parkbremsfunktion lediglich an der Hinterachse HA sowie ggf. am Anhänger über das Anhänger-Steuerventil 19 wirkt.

Ergänzend kann auch im automatisierten Fahrbetrieb eine Parkbremsfunktion zum Abstellen des Fahrzeuges 200 umgesetzt werden, indem von der dritten Steuereinheit 140 ein Automatik-Signal S6 an die zweite Steuereinheit 120 übermittelt wird, die dann insbesondere über das Parkbremsventil 25 das Fahrzeug 200 im Stillstand hält und somit das Fahrzeug 200 automatisiert in einer Parksituation abgesichert werden kann. Durch eine entsprechende Generierung des Bypass-Signals S4 auch im Stillstand und ohne das Vorliegen eines Redundanzfalles kann die automatisierte Parkbremsung auch mit den Radbremsen 1, 2 der Vorderachse VA durchgesetzt werden.

### Bezugszeichenliste (Bestandteil der Beschreibung)

- 1, 2, 3, 4: Radbremsen
- 5, 6, 7, 8: Räder des Nutzfahrzeuges 200
- 9, 10: ABS-Bremsventile
- 11: zweites Steuerventil/Achsmodulator
- 12a: Achsmodulator-Druckluftanschluss
- 12b, 12c: Achsmodulator-Arbeitsanschlüsse
- 12e: erster Achsmodulator-Steuereingang (elektrisch)
- 12f: zweiter Achsmodulator-Steuereingang (pneumatisch)
- 12g: Achsmodulator-Entlüftungsanschluss
- 13: erstes Steuerventil/Relaisventil
- 14: erster Relaisventil-Steuereingang (pneumatisch)
- 15: Relaisventil-Arbeitsanschluss
- 16: Relaisventil-Druckluftanschluss
- 17: zweiter Relaisventil-Steuereingang (elektrisch)
- 18: Relaisventil-Entlüftungsanschluss
- 19: Anhänger-Steuerventil
- 20A: erster Druckvorratsbehälter
- 20B: zweiter Druckvorratsbehälter
- 20C: dritter Druckvorratsbehälter
- 21: (erstes) Bypass-Ventil
- 21a: Bypass-Druckluftanschluss
- 21b: Einlassventil
- 21c: Auslassventil
- 21d: Bypass-Elektronik
- 21e: erster Bypass-Steuereingang
- 21f: Bypass-Entlüftungsanschluss
- 21g: zweiter Bypass-Steuereingang
- 21h: Bypass-Drucksensor
- 21i: Bypass-Ausgang
- 21j: Select-High-Ventil
- 22a: erste Druckluftleitung
- 22c: dritte Druckluftleitung
- 22d: vierte Druckluftleitung
- 22e: fünfte Druckluftleitung
- 23: zweites Bypass-Ventil
- 24a: pneumatische Betätigungsvorrichtung (Bremsventil)
- 24b: elektrische Betätigungsvorrichtung
- 25: Parkbremsventil
- 26: Bypass-Signalleitung
- 30: Parkbremsfunktion (Fahrer)
- 32A, 32B: Steuerventil-Datenleitung
- 33: Parkbrems-Steuerleitung
- 35: Raddrehzahlsensoren
- 40A, 40B: elektrische Kreise
- 41A, 41B: Energieversorgungen
- 100: elektrisch gesteuertes pneumatisches Bremssystem
- 110: erste Steuereinheit
- 120: zweite Steuereinheit
- 130: Achsmodulator-Elektronik
- 140: dritte Steuereinheit
- 150: Relaisventil-Elektronik
- 200: Nutzfahrzeug

- A: erster Bremskreis
- B: zweiter Bremskreis
- C: dritter Bremskreis (Parkbremskreis)
- ds: Betätigungsweg
- fPB: Parkbrems-Vorgabe
- HA: Hinterachse
- p1, p2, p3, p4: Bremsdruck an den Radbremsen 1, 2, 3, 4
- pA: Relaisventil-Steuerd ruck
- pA1: Bremsventil-Relaisventil-Steuerdruck
- pB: Achsmodulator-Steuerdruck
- pB1: Bremsventil-Achsmodulator-Steuerdruck
- pC: Bypass-Steuerdruck
- pPB: Parkbremsventil-Steuerdruck
- pT: Anhänger-Steuerdruck
- S1A: erstes Betätigungs-Signal (ds)
- S1B: zweites Betätigungs-Signal (ds)
- S2A: erstes Anforderungs-Signal (zSoll)
- S2B: zweites Anforderungs-Signal (zSoll)
- S3: Parkbrems-Signal
- S4: Bypass-Signal
- S5: Fahrer-Signal
- S6: Automatik-Signal
- S7: Überwachungssignal
- SA: Relaisventil-Steuersignal
- SB: Achsmodulator-Steuersignal
- VA: Vorderachse
- zSoll: Fahrzeug-Soll-Verzögerung
- zFahr: Fahrer-Verzögerung

## Patentansprüche

1. Elektronisch steuerbares pneumatisches Bremssystem (100), aufweisend:
mindestens zwei Bremskreise (A, B, C), wobei mindestens einem der mindestens zwei Bremskreise (A, B, C) ein elektrisch und pneumatisch steuerbares Steuerventil (11, 13) und einem weiteren der mindestens zwei Bremskreise (A, B, C) ein elektrisch steuerbares Parkbremsventil (25) zugeordnet ist, zum Vorgeben von Bremsdrücken (p1, p2, p3, p4, pPB) zur Ansteuerung von Radbremsen (1, 2, 3, 4) des jeweiligen Bremskreises (A, B, C),
eine erste Steuereinheit (110), die ausgebildet ist, das jeweilige Steuerventil (11, 13) sowohl in Abhängigkeit einer automatisiert angeforderten Fahrzeug-Soll-Verzögerung (zSoll), wie auch alternativ hierzu in Abhängigkeit einer vom Fahrer vorgegebenen Betätigung (ds) über eine Betätigungsvorrichtung (24a, 24b) elektrisch anzusteuern, **dadurch gekennzeichnet, dass**
eine zweite Steuereinheit (120) ausgebildet ist, das Parkbremsventil (25) in Abhängigkeit der automatisiert angeforderten Fahrzeug-Soll-Verzögerung (zSoll) elektrisch zu steuern, wenn eine elektrische Ansteuerung des jeweiligen Steuerventils (11, 13) verhindert ist, zum Ausbilden einer elektronisch-pneumatisch gesteuerten Redundanz, und
weiterhin mindestens ein einem Steuerventil (11, 13) zugeordnetes Bypass-Ventil (21, 23) vorgesehen ist, das ausgebildet ist, das zugeordnete Steuerventil (11, 13) pneumatisch (pA, pB) anzusteuern, wobei die pneumatische Ansteuerung (pA, pB) sowohl in Abhängigkeit der automatisiert angeforderten Fahrzeug-Soll-Verzögerung (zSoll), wie auch alternativ hierzu in Abhängigkeit der von dem Fahrer vorgegebenen Betätigung (ds) der Betätigungsvorrichtung (24a, 24b) erfolgt, wenn eine elektrische Ansteuerung des jeweiligen Steuerventils (11, 13) verhindert ist, zum Erweitern der elektronisch-pneumatisch gesteuerten Redundanz.

2. Elektronisch steuerbares pneumatisches Bremssystem (100) nach Anspruch 1, **dadurch gekennzeichnet, dass** das dem Bypass-Ventil (21, 23) zugeordnete Steuerventil (11, 13) einen elektrischen Steuereingang (12e, 17) zum Aufnehmen eines elektrischen Steuersignals (SA, SB) von der ersten Steuereinheit (110) und einen pneumatischen Steuereingang (12f, 14) insbesondere zum Aufnehmen eines von dem jeweils zugeordneten Bypass-Ventil (21, 23) vorgegebenen Steuerdruckes (pA, pB) aufweist, wobei von dem jeweiligen Steuerventil (11, 13) in Abhängigkeit des elektrischen Steuersignals (SA, SB) oder insbesondere dann, wenn eine elektrische Ansteuerung des jeweiligen Steuerventils (11, 13) verhindert ist, in Abhängigkeit des von dem zugeordneten Bypass-Ventil (21, 23) vorgegebenen Steuerdruckes (pA, pB) die Bremsdrücke (p1, p2, p3, p4) an die Radbremsen (1, 2, 3, 4) des jeweiligen Bremskreises (A, B) aussteuerbar sind.

3. Elektronisch steuerbares pneumatisches Bremssystem (100) nach Anspruch 1 oder 2, **dadurch gekennzeichnet, dass** die Betätigungsvorrichtung als ein pneumatisches Bremsventil (24) ausgeführt ist, das ausgebildet ist, in Abhängigkeit eines Betätigungsweges (ds), der durch eine Betätigung des Bremsventils (24a) durch einen Fahrer vorgegeben ist, einen Bremsventil-Steuerdruck (pA1, pB1) an das Bypass-Ventil (21, 23) sowie ein erstes Betätigungs-Signal (S1A) an die erste Steuereinheit (110) zu übermitteln.

4. Elektronisch steuerbares pneumatisches Bremssystem (100) nach Anspruch 3, **dadurch gekennzeichnet, dass** das Bremsventil (24a) pneumatisch über eine Druckluftleitung (22a, 22b) und die zweite Steuereinheit (120) elektrisch über eine Bypass-Signalleitung (26) mit dem dem jeweiligen Steuerventil (11, 13) zugeordneten Bypass-Ventil (21, 23) verbunden sind zum Übertragen des Bremsventil-Steuerdrucks (pA1, pB1) bzw. eines von der zweiten Steuereinheit (120) bereitgestellten, die Fahrzeug-Soll-Verzögerung (zSoll) übermittelnden Bypass-Signals (S4) an das Bypass-Ventil (21, 23),
wobei das Bypass-Ventil (21, 23) ausgebildet ist, einen von der über das Bypass-Signal (S4) übertragenen Fahrzeug-Soll-Verzögerung (zSoll) abhängigen Bypass-Steuerdruck (pC) zu erzeugen, und
wobei von dem Bypass-Ventil (21, 23) ein Steuerdruck (pA, pB) an das jeweils zugeordnete Steuerventil (11, 13) aussteuerbar ist, der entweder dem Bremsventil-Steuerdruck (pA1, pB1) oder dem Bypass-Steuerdruck (pC) entspricht, je nachdem, welcher der beiden Steuerdrücke (pA1, pB1, pC) höher ist.

5. Elektronisch steuerbares pneumatisches Bremssystem (100) nach Anspruch 4, **dadurch gekennzeichnet, dass** das mindestens eine Bypass-Ventil (21, 23) ein Select-High-Ventil (21j) aufweist zum Auswählen des höheren der beiden Steuerdrücke (pA1, pB1, pC).

6. Elektronisch steuerbares pneumatisches Bremssystem (100) nach einem der Ansprüche 3 bis 5, **dadurch gekennzeichnet, dass** das Bypass-Ventil (21, 23) in dem Bremsventil (24a) integriert ist.

7. Elektronisch steuerbares pneumatisches Bremssystem (100) nach einem der Ansprüche 1 bis 5, **dadurch gekennzeichnet, dass** das Bypass-Ventil (21, 23) in dem jeweils zugeordneten Steuerventil (11, 13) des jeweiligen Bremskreises (A, B) integriert ist.

8. Elektronisch steuerbares pneumatisches Bremssystem (100) nach Anspruch 1 oder 2, **dadurch gekennzeichnet, dass** die Betätigungsvorrichtung als eine elektrische Betätigungsvorrichtung (24b) ausgeführt ist, die ausgebildet ist, in Abhängigkeit einer Betätigung durch einen Fahrer, die beispielsweise durch einen Betätigungsweg (ds) vom Fahrer vorgegeben ist, ein erstes elektrisches Betätigungs-Signal (S1A) und ein zweites elektrisches Betätigungs-Signal (S1B) zu erzeugen, wobei das erste Betätigungs-Signal (S1A) an die erste Steuereinheit (110) übermittelbar ist.

9. Elektronisch steuerbares pneumatisches Bremssystem (100) nach Anspruch 8, **dadurch gekennzeichnet, dass** die elektrische Betätigungsvorrichtung (24b) mit der zweiten Steuereinheit (120) verbunden ist zum elektrischen Übertragen des zweiten Betätigungs-Signals (S1B) an die zweite Steuereinheit (120), wobei die zweite Steuereinheit (120) ausgebildet ist, die über das zweite Betätigungs-Signal (S1B) übertragene Betätigung (ds) des Fahrers in eine Fahrer-Verzögerung (zFahr) umzurechnen, und
wobei die zweite Steuereinheit (120) elektrisch über eine Bypass-Signalleitung (26) mit dem dem jeweiligen Steuerventil (11, 13) zugeordneten Bypass-Ventil (21, 23) verbunden ist zum elektrischen Übertragen der von der zweiten Steuereinheit (120) bereitgestellten Fahrzeug-Soll-Verzögerung (zSoll) oder der Fahrer-Verzögerung (zFahr) an das Bypass-Ventil (21, 23), je nachdem, welche Verzögerung (zSoll, zFahr) größer ist,
wobei das Bypass-Ventil (21, 23) ausgebildet ist, einen Bypass-Steuerdruck (pC) zu erzeugen, der abhängig ist von der über das Bypass-Signal (S4) übertragenen Fahrzeug-Soll-Verzögerung (zSoll) oder der Fahrer-Verzögerung (zFahr), und der von dem Bypass-Ventil (21, 23) als ein Steuerdruck (pA, pB) an das jeweils zugeordnete Steuerventil (11, 13) aussteuerbar ist.

10. Elektronisch steuerbares pneumatisches Bremssystem (100) nach einem der vorhergehenden Ansprüche, **dadurch gekennzeichnet, dass** das Bremssystem (100) als ein dreikreisiges Bremssystem (100) ausgeführt ist, wobei einem ersten und einem zweiten Bremskreis (A, B) jeweils ein Steuerventil (11, 13) und einem dritten Bremskreis (C) das Parkbremsventil (25) zugeordnet ist, wobei der erste Bremskreis (A) insbesondere Radbremsen (1, 2) einer Vorderachse (VA) und der zweite und der dritte Bremskreis (B, C) Radbremsen (3, 4) einer angetriebenen Hinterachse (HA) ansteuert, und lediglich dem dem ersten Bremskreis (A) zugeordneten Steuerventil (11) ein Bypass-Ventil (21) zugeordnet ist.

11. Elektronisch steuerbares pneumatisches Bremssystem (100) nach einem der vorhergehenden Ansprüche, **dadurch gekennzeichnet, dass** das mindestens eine Steuerventil (11, 13) als ein Relaisventil (11, 13) oder als Achsmodulator (11) ausgeführt ist.

12. Elektronisch steuerbares pneumatisches Bremssystem (100) nach einem der vorhergehenden Ansprüche, **dadurch gekennzeichnet, dass** die automatisiert vorgegebene Fahrzeug-Soll-Verzögerung (zSoll) von einer dritten Steuereinheit (140) vorgebbar ist, wobei die dritte Steuereinheit (140) ausgebildet ist, das Fahrzeug (200) automatisiert zu steuern.

13. Elektronisch steuerbares pneumatisches Bremssystem (100) nach einem der vorhergehenden Ansprüche, **dadurch gekennzeichnet, dass** die zweite Steuereinheit (120) weiterhin über eine Parkbremsfunktion (30) ansteuerbar ist, wobei die Parkbremsfunktion (30) insbesondere im Stillstand des Fahrzeuges (200) aktivierbar ist und bei Aktivierung ein Parkbremsventil-Steuerdruck (pPB) an Radbremsen (3, 4) des dem Parkbremsventil zugeordneten Bremskreises (C), insbesondere einem eine Hinterachse (HA) abbremsenden dritten Bremskreises (C) des Fahrzeuges (200), aussteuerbar ist zum Halten des Fahrzeuges (200) in einer Parkposition.

14. Elektronisch steuerbares pneumatisches Bremssystem (100) nach einem der vorhergehenden Ansprüche, **dadurch gekennzeichnet, dass** zusätzlich ein Anhänger-Steuerventil (19) vorgesehen ist, das mit einem Anhänger-Steuerdruck (pT) ansteuerbar ist, wobei ein einem Bremskreis (A, B, C) zugeführter, vom Bypass-Ventil (21) ausgegebener Steuerventil-Steuerdruck (pA) als Anhänger-Steuerdruck (pT) an das Anhänger-Steuerventil (19) aussteuerbar ist, zum Ausbilden einer elektrischpneumatischen Redundanz für einen Anhänger.

15. Elektronisch steuerbares pneumatisches Bremssystem (100) nach einem der vorhergehenden Ansprüche, **dadurch gekennzeichnet, dass** der zweiten Steuereinheit (120) eine von der ersten Steuereinheit (110) unabhängige zweite Energieversorgung (41B) zugeordnet ist zum elektrischen Trennen der Steuereinheiten (110, 120).

16. Verfahren zum elektronischen Steuern eines pneumatischen Bremssystems (100) nach einem der Ansprüche 1 bis 15, mit mindestens den folgenden Schritten:
- Erkennen, ob ein Ausfall oder ein Defekt in der elektronischen Ansteuerung der Steuerventile (11, 13) des mindestens einen Bremskreises (A, B), insbesondere ein Defekt der ersten Steuereinheit (110) vorliegt;
- Ansteuern des Parkbremsventils (25) sowie des mindestens einen Bypass-Ventils (21, 23) durch die zweite Steuereinheit (120), wenn eine elektrische Ansteuerung des jeweiligen Steuerventils (11, 13) verhindert ist, wobei das Parkbremsventil (25) einen Parkbremsventil-Steuerdruck (pPB) an einen dritten Bremskreis (C) ausgibt und über das mindestens eine Bypass-Ventil (21, 23) eine pneumatische Ansteuerung (pA, pB) des mindestens einen Steuerventils (11, 13) in mindestens einem weiteren Bremskreis (A, B) in Abhängigkeit der automatisiert angeforderten Fahrzeug-Soll-Verzögerung (zSoll) oder in Abhängigkeit der von dem Fahrer vorgegebenen Betätigung (ds) der Betätigungsvorrichtung (24a, 24b) erfolgt.

17. Fahrzeug (200), insbesondere Nutzfahrzeug (200), mit einem elektronisch gesteuerten pneumatischen Bremssystem (100) nach einem der Ansprüche 1 bis 15, insbesondere geeignet zur Durchführung eines Verfahrens nach Anspruch 16.

## Claims

1. An electronically controllable pneumatic brake system (100), comprising:
at least two brake circuits (A, B, C), wherein at least one of the at least two brake circuits (A, B, C) is assigned an electrically and pneumatically controllable control valve (11, 13) and a further of the at least two brake circuits (A, B, C) is assigned an electrically controllable parking brake valve (25), for specifying brake pressures (p1, p2, p3, p4, pPB) for controlling wheel brakes (1, 2, 3, 4) of the respective brake circuit (A, B, C),
a first control unit (110), which is configured to electrically control the respective control valve (11, 13) both depending on a target vehicle deceleration (zSoll) requested in automated manner, and as an alternative to this depending on an actuation (ds) specified by the driver via an actuation device (24a, 24b), **characterized in that**
a second control unit (120) is configured to electrically control the parking brake valve (25) depending on the target vehicle deceleration (zSoll) requested in automated manner when an electrical control of the respective control valve (11, 13) is prevented from forming an electronically-pneumatically controlled redundancy, and further at least one bypass valve (21, 23) assigned to a control valve (11, 13) is provided, which is configured to pneumatically (pA, pB) control the assigned control valve (11, 13), wherein the pneumatic control (pA, pB) occurs both depending on the target vehicle deceleration (zSoll) requested in automated manner, and as an alternative to this depending on the actuation (ds) of the actuation device (24a, 24b) predefined by the driver, when an electrical control of the respective control valve (11, 13) is prevented from expanding the electronically-pneumatically controlled redundancy.

2. The electronically controllable pneumatic brake system (100) according to claim 1, **characterized in that** the control valve (11, 13) assigned to the bypass valve (21, 23) comprises an electrical control input (12e, 17) for receiving an electrical control signal (SA, SB) from the first control unit (110) and a pneumatic control input (12f, 14), in particular for receiving a control pressure (pA, pB) specified by the respective assigned bypass valve (21, 23), wherein, depending on the electrical control signal (SA, SB) or, in particular, when an electrical control of the respective control valve (11, 13) is prevented, the brake pressures (p1, p2, p3, p4) on the wheel brakes (1, 2, 3, 4) of the respective brake circuit (A, B) are controllable by the respective control valve (11, 13) depending on the control pressure (pA, pB) specified from the assigned bypass valve (21, 23).

3. The electronically controllable pneumatic brake system (100) according to claim 1 or 2, **characterized in that** the actuation device is designed as a pneumatic brake valve (24), which is configured, depending on an actuation path (ds) which is specified by a driver by an actuation of the brake valve (24a), to transmit a brake valve control pressure (pAl, pB1) to the bypass valve (21, 23) and to transmit a first actuation signal (S1A) to the first control unit (110).

4. The electronically controllable pneumatic brake system (100) according to claim 3, **characterized in that** the brake valve (24a) is pneumatically connected via a compressed air line (22a, 22b) and the second control unit (120) is electrically connected via a bypass signal line (26) to the bypass valve (21, 23) assigned to the respective control valve (11, 13) for transmitting the brake valve control pressure (pAl, pB1) or a bypass signal (S4) provided by the second control unit (120) transmitting the target vehicle deceleration (zSoll) to the bypass valve (21, 23),
wherein the bypass valve (21, 23) is configured to generate a bypass control pressure (pC) dependent on the target vehicle deceleration (zSoll) transmitted via the bypass signal (S4), and
wherein a control pressure (pA, pB) from the bypass valve (21, 23) to the respective assigned control valve (11, 13) is controllable, which either corresponds to the brake valve control pressure (pAl, pB1) or to the bypass control pressure (pC), depending on which of the two control pressures (pAl, pB1, pC) is higher.

5. The electronically controllable pneumatic brake system (100) according to claim 4, **characterized in that** the at least one bypass valve (21, 23) comprises a select high valve (21) for selecting the higher of the two control pressures (pAl, pB1, pC) .

6. The electronically controllable pneumatic brake system (100) according to any of claims 3 to 5, **characterized in that** the bypass valve (21, 23) is integrated in the brake valve (24a).

7. The electronically controllable pneumatic brake system (100) according to any of claims 1 to 5, **characterized in that** the bypass valve (21, 23) is integrated in the respective assigned control valve (11, 13) of the respective brake circuit (A, B).

8. The electronically controllable pneumatic brake system (100) according to claim 1 or 2, **characterized in that** the actuation device is designed as an electrical actuation device (24b), which is configured, depending on an actuation by a driver, for example by an actuation path (ds) specified by the driver, to generate a first electrical actuation signal (S1A) and a second electrical actuation signal (S1B), wherein the first actuation signal (S1A) can be transmitted to the first control unit (110).

9. The electronically controllable pneumatic brake system (100) according to claim 8, **characterized in that** the electrical actuation device (24b) is connected to the second control unit (120) for electrically transmitting the second actuation signal (S1B) to the second control unit (120), wherein the second control unit (120) is configured to convert the actuation (ds) of the driver transmitted via the second actuation signal (S1B) into a driver deceleration (zFahr), and
wherein the second control unit (120) is electrically connected to the bypass valve (21, 23) assigned to the respective control valve (11, 13) via a bypass signal line (26) for the electrical transmission of the target vehicle deceleration (zSoll) provided by the second control unit (120) or for the electrical transmission of the driver deceleration (zFahr) to the bypass valve (21, 23), depending on which deceleration (zSoll, zFahr) is greater,
wherein the bypass valve (21, 23) is configured to generate a bypass control pressure (pC) which is dependent on the target vehicle deceleration (zSoll) or the driver deceleration (zFahr) transmitted via the bypass signal (S4), and is controllable from the bypass valve (21, 23) as a control pressure (pA, pB) to the respective assigned control valve (11, 13).

10. The electronically controllable pneumatic brake system (100) according to any of the foregoing claims, **characterized in that** the brake system (100) is configured as a three-circuit brake system (100), wherein a first and a second brake circuit (A, B) are each assigned a control valve (11, 13) and a third brake circuit (C) is assigned the parking brake valve (25), wherein the first brake circuit (A) in particular controls wheel brakes (1, 2) of a front axle (VA) and the second and the third brake circuit (B, C) control wheel brakes (3, 4) of a driven rear axle (HA), and only the control valve (11) assigned the first brake circuit (A) is assigned a bypass valve (21).

11. The electronically controllable brake system (100) according to any of the foregoing claims, **characterized in that** the at least one control valve (11, 13) is designed as a relay valve (11, 13) or as an axle modulator (11).

12. The electronically controllable pneumatic brake system (100) according to any of the foregoing claims, **characterized in that** the target vehicle deceleration (zSoll) specified in automated manner is specifiable by a third control unit (140), wherein the third control unit (140) is configured to control the vehicle (200) in automated manner.

13. The electronically controllable pneumatic brake system (100) according to any of the foregoing claims, **characterized in that** the second control unit (120) is furthermore controllable by a parking brake function (30), wherein the parking brake function (30) is in particular activatable when the vehicle (200) is stationary and in the event of activation a parking brake valve control pressure (pPB) to the wheel brakes (3, 4) of the brake circuit (C) assigned to the parking brake valve, in particular to a third brake circuit (C) of the vehicle (200) braking a rear axis (HA), is controllable for the purpose of stopping the vehicle (200) in a parking position.

14. The electronically controllable pneumatic brake system (100) according to any of the foregoing claims, **characterized in that** a trailer control valve (19) is additionally provided, which is controllable with a trailer control pressure (pT), wherein a control valve control pressure (pA) supplied to a brake circuit (A, B, C) and output from the bypass valve (21) is controllable as trailer control pressure (pT) to the trailer control valve (19), for forming an electrical-pneumatic redundancy for a trailer.

15. The electronically controllable pneumatic brake system (100) according to any of the foregoing claims, **characterized in that** the second control unit (120) is assigned a second energy supply (41B) separate from the first control unit (110) for electrical disconnection of the control units (110, 120).

16. A method for electronically controlling a pneumatic brake system (100) according to any of claims 1 to 15, having at least the following steps:
- detecting whether a failure or a defect in the electronic control of the control valves (11, 13) of the at least one brake circuit (A, B), in particular a defect of the first control unit (110), is present;
- controlling the parking brake valve (25) and the at least one bypass valve (21, 23) by the second control unit (120), when an electrical control of the respective control valve (11, 13) is prevented, wherein the parking brake valve (25) outputs a parking brake valve control pressure (pPB) to a third brake circuit (C) and via the at least one bypass valve (21, 23) a pneumatic control (pA, pB) of the at least one control valve (11, 13) occurs in at least one further brake circuit (A, B) depending on the target vehicle deceleration (zSoll) requested in automated manner or depending on the actuation (ds) of the actuation device (24a, 24b) specified by the driver.

17. A vehicle (200), in particular a commercial vehicle (200), having an electronically controlled pneumatic brake system (100) according to any of claims 1 to 15, in particular suitable for carrying out a method according to claim 16.

## Revendications

1. Système de freinage pneumatique à commande électronique (100), présentant :
au moins deux circuits de freinage (A, B, C), dans lequel une soupape de commande (11, 13) à commande électrique et pneumatique est associée à au moins un des au moins deux circuits de freinage (A, B, C) et une soupape de frein de stationnement (25) à commande électrique est associée à un autre des au moins deux circuits de freinage (A, B, C), pour prédéfinir des pressions de freinage (p1, p2, p3, p4, pPB) pour la commande de freins de roue (1, 2, 3, 4) du circuit de freinage (A, B, C) respectif,
une première unité de commande (110), qui est réalisée pour commander électriquement la soupape de commande (11, 13) respective aussi bien en fonction d'une décélération de consigne de véhicule (zSoll) demandée automatiquement qu'en variante de cela en fonction d'un actionnement (ds) prédéfini par le conducteur par l'intermédiaire d'un dispositif d'actionnement (24a, 24b), **caractérisé en ce que**
une deuxième unité de commande (120) est réalisée pour commander électriquement la soupape de frein de stationnement (25) en fonction de la décélération de consigne de véhicule (zSoll) demandée automatiquement, lorsqu'une commande électrique de la soupape de commande (11, 13) respective est empêchée, pour la réalisation d'une redondance pouvant être commandée de manière électropneumatique, et en outre au moins une soupape de dérivation (21, 23) associée à une soupape de commande (11, 13) est prévue, qui est réalisée pour commander de manière pneumatique (pA, pB) la soupape de commande (11, 13) associée, dans lequel la commande pneumatique (pA, pB) s'effectue aussi bien en fonction de la décélération de consigne de véhicule (zSoll) demandée automatiquement qu'également en variante de cela en fonction de l'actionnement (ds) du dispositif d'actionnement (24a, 24b) prédéfini par le conducteur, lorsqu'une commande électrique de la soupape de commande (11, 13) respective est empêchée, pour augmenter la redondance commandée de manière électropneumatique.

2. Système de freinage pneumatique à commande électronique (100) selon la revendication 1, **caractérisé en ce que** la soupape de commande (11, 13) associée à la soupape de dérivation (21, 23) présente une entrée de commande électrique (12e, 17) pour la réception d'un signal de commande électrique (SA, SB) par la première unité de commande (110) et une entrée de commande pneumatique (12f, 14) en particulier pour la réception d'une pression de commande (pA, pB) prédéfinie par la soupape de dérivation (21, 23) respectivement associée, dans lequel les pressions de freinage (p1, p2, p3, p4) sur les freins de roue (1, 2, 3, 4) du circuit de freinage (A, B) respectif peuvent être commandées par la soupape de commande (11, 13) respective en fonction du signal de commande électrique (SA, SB) ou en particulier lorsqu'une commande électrique de la soupape de commande (11, 13) respective est empêchée, en fonction de la pression de commande (pA, pB) prédéfinie par la soupape de dérivation (21, 23) associée.

3. Système de freinage pneumatique à commande électronique (100) selon la revendication 1 ou 2, **caractérisé en ce que** le dispositif d'actionnement est conçu sous la forme d'une soupape de freinage pneumatique (24), qui est réalisée pour transmettre, en fonction d'un trajet d'actionnement (ds) qui est prédéfini par un actionnement de la soupape de freinage (24a) par un conducteur, une pression de commande de soupape de freinage (pAl, pB1) à la soupape de dérivation (21, 23) ainsi qu'un premier signal d'actionnement (S1A) à la première unité de commande (110).

4. Système de freinage pneumatique à commande électronique (100) selon la revendication 3, **caractérisé en ce que** la soupape de freinage (24a) est reliée à la soupape de dérivation (21, 23) associée à la soupape de commande (11, 13) respective de façon pneumatique par l'intermédiaire d'une conduite d'air comprimé (22a, 22b) et la deuxième unité de commande (120) de manière électrique par l'intermédiaire d'une ligne de signalisation de dérivation (26) pour transférer à la soupape de dérivation (21, 23) la pression de commande de soupape de freinage (pAl, pB1) ou un signal de dérivation (S4) fourni par la deuxième unité de commande (120), transmettant la décélération de consigne de véhicule (zSoll),
dans lequel la soupape de dérivation (21, 23) est réalisée pour produire une pression de commande de dérivation (pC) dépendant de la décélération de consigne de véhicule (zSoll) transférée par l'intermédiaire du signal de dérivation (S4), et
dans lequel une pression de commande (pA, pB), qui correspond soit à la pression de commande de soupape de freinage (pAl, pB1) soit à la pression de commande de dérivation (pC), selon celle des deux pressions de commande (pAl, pB1, pC) qui est la plus élevée, peut être modulée sur la soupape de commande (11, 13) respectivement associée par la soupape de dérivation (21, 23).

5. Système de freinage pneumatique à commande électronique (100) selon la revendication 4, **caractérisé en ce que** la au moins une soupape de dérivation (21, 23) présente une soupape sélection haute (21j) pour la sélection de la plus élevée des deux pressions de commande (pAl, pB1, pC).

6. Système de freinage pneumatique à commande électronique (100) selon l'une quelconque des revendications 3 à 5, **caractérisé en ce que** la soupape de dérivation (21, 23) est intégrée dans la soupape de freinage (24a).

7. Système de freinage pneumatique à commande électronique (100) selon l'une quelconque des revendications 1 à 5, **caractérisé en ce que** la soupape de dérivation (21, 23) est intégrée dans la soupape de commande (11, 13) respectivement associée du circuit de freinage (A, B) respectif.

8. Système de freinage pneumatique à commande électronique (100) selon la revendication 1 ou 2, **caractérisé en ce que** le dispositif d'actionnement est conçu sous la forme d'un dispositif d'actionnement (24b) électrique, qui est réalisé pour produire, en fonction d'un actionnement par un conducteur, qui est prédéfini par le conducteur par exemple par un trajet d'actionnement (ds), un premier signal d'actionnement (S1A) électrique et un deuxième signal d'actionnement (S1B) électrique, dans lequel le premier signal d'actionnement (S1A) peut être transmis à la première unité de commande (110).

9. Système de freinage pneumatique à commande électronique (100) selon la revendication 8, **caractérisé en ce que** le dispositif d'actionnement (24b) électrique est relié à la deuxième unité de commande (120) pour la transmission électrique du deuxième signal d'actionnement (S1B) à la deuxième unité de commande (120), dans lequel la deuxième unité de commande (120) est réalisée pour convertir l'actionnement (ds) du conducteur transféré par l'intermédiaire du deuxième signal d'actionnement (S1B) en une décélération de conducteur (zFahr), et
dans lequel la deuxième unité de commande (120) est reliée électriquement à la soupape de dérivation (21, 23) associée à la soupape de commande (11, 13) respective par l'intermédiaire d'une ligne de signalisation de dérivation (26) pour le transfert électrique de la décélération de consigne de véhicule (zSoll) fournie par la deuxième unité de commande (120) ou de la décélération de conducteur (zFahr) à la soupape de dérivation (21, 23) selon celle de la décélération (zSoll, ZFahr) qui est la plus importante,
dans lequel la soupape de dérivation (21, 23) est réalisée pour produire une pression de commande de dérivation (pC), qui dépend de la décélération de consigne de véhicule (zSoll) transférée par l'intermédiaire du signal de dérivation (S4) ou de la décélération de conducteur (zFahr), et qui peut être modulée sur la soupape de commande (11, 13) respectivement associée par la soupape de dérivation (21, 23) en tant que pression de commande (pA, pB).

10. Système de freinage pneumatique à commande électronique (100) selon l'une quelconque des revendications précédentes, **caractérisé en ce que** le système de freinage (100) est conçu sous la forme d'un système de freinage (100) à trois circuits, dans lequel respectivement une soupape de commande (11, 13) est associée à un premier et un deuxième circuit de freinage (A, B) et la soupape de frein de stationnement (25) à un troisième circuit de freinage (C), dans lequel le premier circuit de freinage (A) commande en particulier des freins de roue (1, 2) d'un essieu avant (VA) et le deuxième et le troisième circuit de freinage (B, C) commande les freins de roue (3, 4) d'un essieu arrière (HA) entraîné, et une soupape de dérivation (21) est associée uniquement à la soupape de commande (11) associée au premier circuit de freinage (A).

11. Système de freinage pneumatique à commande électronique (100) selon l'une quelconque des revendications précédentes, **caractérisé en ce que** la au moins une soupape de commande (11, 13) est conçue sous la forme d'une soupape relais (11, 13) ou d'un modulateur d'essieu (11).

12. Système de freinage pneumatique à commande électronique (100) selon l'une quelconque des revendications précédentes, **caractérisé en ce que** la décélération de consigne de véhicule (zSoll) prédéfinie automatiquement peut être prédéfinie par une troisième unité de commande (140), dans lequel la troisième unité de commande (140) est réalisée pour commander automatiquement le véhicule (200).

13. Système de freinage pneumatique à commande électronique (100) selon l'une quelconque des revendications précédentes, **caractérisé en ce que** la deuxième unité de commande (120) peut être commandée en outre par l'intermédiaire d'une fonction de frein de stationnement (30), dans lequel la fonction de frein de stationnement (30) peut être activée en particulier lorsque le véhicule (200) est à l'arrêt et lors de l'activation une pression de commande de soupape de frein de stationnement (pPB) peut être modulée sur les freins de roue (3, 4) du circuit de freinage (C) associé à la soupape de frein de stationnement, en particulier un troisième circuit de freinage (C) du véhicule (200) freinant un essieu arrière (HA) pour maintenir le véhicule (200) dans une position de stationnement.

14. Système de freinage pneumatique à commande électronique (100) selon l'une quelconque des revendications précédentes, **caractérisé en ce qu'**une soupape de commande de remorque (19) est prévue en plus, qui peut être commandée avec une pression de commande de remorque (pT), dans lequel une pression de commande de soupape de commande (pA) amenée à un circuit de freinage (A, B, C), délivrée par la soupape de dérivation (21), peut être modulée en tant que pression de commande de remorque (pT) sur la soupape de commande de remorque (19), pour la réalisation d'une redondance électropneumatique pour une remorque.

15. Système de freinage pneumatique à commande électronique (100) selon l'une quelconque des revendications précédentes, **caractérisé en ce qu'**une deuxième alimentation en énergie (41B) indépendante de la première unité de commande (110) est associée à la deuxième unité de commande (120) pour la séparation électrique des unités de commande (110, 120).

16. Procédé pour la commande électronique d'un système de freinage pneumatique (100) selon l'une quelconque des revendications 1 à 15, avec au moins les étapes suivantes :
- le fait d'identifier si une panne ou un défaut est présent(e) dans la commande électronique des soupapes de commande (11, 13) du au moins un circuit de freinage (A, B), en particulier un défaut de la première unité de commande (110) ;
- la commande de la soupape de frein de stationnement (25) ainsi que de la au moins une soupape de dérivation (21, 23) par la deuxième unité de commande (120), lorsqu'une commande électrique de la soupape de commande (11, 13) respective est empêchée, dans lequel la soupape de frein de stationnement (25) délivre une pression de commande de soupape de frein de stationnement (pPB) à un troisième circuit de freinage (C) et une commande pneumatique (pA, pB) de la au moins une soupape de commande (11, 13) par l'intermédiaire de la au moins une soupape de dérivation (21, 23) s'effectue dans au moins un autre circuit de freinage (A, B) en fonction de la décélération de consigne de véhicule (zSoll) demandée automatiquement ou en fonction de l'actionnement (ds) du dispositif d'actionnement (24a, 24b) prédéfini par le conducteur.

17. Véhicule (200), en particulier véhicule utilitaire (200), avec un système de freinage pneumatique à commande électronique (100) selon l'une quelconque des revendications 1 à 15, en particulier adapté à la mise en œuvre d'un procédé selon la revendication 16.
